# EUROPÄISCHE PATENTSCHRIFT

(11) **EP 3 063 243 B1**
(45) Veröffentlichungstag und Bekanntmachung des Hinweises auf die Patenterteilung: **29.07.2020**
(21) Anmeldenummer: 14781153.3
(22) Anmeldetag: 02.10.2014
(51) Int. Cl.: C09J 4/06, C08K 5/00, C09J 133/06

(54) **REAKTIVES 2-KOMPONENTENKLEBSTOFFSYSTEM**
REACTIVE 2-COMPONENT ADHESIVE SYSTEM
SYSTÈME D'ADHÉSIF RÉACTIF BICOMPOSANT

(30) Priorität: 01.11.2013 DE 102013222278
(43) Veröffentlichungstag der Anmeldung: 07.09.2016
(73) Patentinhaber: tesa SE, 22848 Norderstedt (DE)
(72) Erfinder: SCHÜMANN, Uwe, 25421 Pinneberg (DE); ELLRINGMANN, Kai, 22589 Hamburg (DE); NGUYEN, Duc Hung, 22395 Hamburg (DE); PRADIER, Clementine, 69110 Sainte Foy Les Lyon (FR)
(86) Internationale Anmeldenummer: PCT/EP2014/071172
(87) Internationale Veröffentlichungsnummer: WO 2015/062809

(56) Entgegenhaltungen:
- DE-U1- 29 706 115
- JP-A- H02 263 880
- US-A- 4 898 899
- US-A1- 2010 062 260

## Beschreibung

### Technisches Gebiet der Erfindung

Die vorliegende Erfindung betrifft ein 2-Komponentenklebstoffsystem in Filmform, zur Verklebung von diversen Materialien, wie z.B. Metall, Holz, Glas und/oder Kunststoff. Dieses 2-Komponentenklebstoffsystem umfasst zwei reaktive Klebstoffkomponenten A und B in Filmform, die jeweils mindestens ein reaktives Monomer oder Reaktivharz (a) umfassen, wobei die erste Klebstoffkomponente zusätzlich mindestens einen Radikalinitiator (c) umfasst und die zweite Klebstoffkomponente zusätzlich mindestens einen Aktivator (b) umfasst. Als Aktivator wird erfindungsgemäß ein Mangan(II)-Komplex, ein Eisen(II)-Komplex oder ein Kobalt(II)-Komplex, jeweils mit einer Verbindung, ausgewählt aus Porphyrin, Porphyrazin oder Phthalocyanin oder einem Derivat einer dieser Verbindungen, als Ligand bereitgestellt.

Das erfindungsgemäße 2-Komponentenklebstoffsystem in Filmform eingesetzt. Dabei wird den zwei reaktiven Klebstoffkomponenten A und B, wie oben beschrieben, eine polymere Filmbildner-Matrix hinzugefügt.

Außerdem wird ein Verfahren zur Herstellung der erfindungsgemäßen reaktiven Klebstoffsysteme, wie oben beschrieben, und ein Kit zur Bereitstellung des erfindungsgemäßen, reaktiven Klebstoffsystems, umfassend eine erste und eine zweite reaktive Klebstoffkomponente, wie oben beschrieben, zur Verfügung gestellt.

### Allgemeiner Stand der Technik

2-Komponentenklebstoffsysteme sind allgemein seit Jahren bekannt und in der Fachliteratur eingehend beschrieben. In diesen Systemen wird ein aus zwei Komponenten bestehendes Klebstoff-System auf die zu verklebenden Teile aufgetragen, wobei üblicherweise zwei flüssige Komponenten zum Einsatz kommen. Beispielsweise besteht bei chemisch reagierenden 2-Komponenten-Polymerisationsklebesystemen die eine Komponente aus dem zu polymerisierenden Monomer und einem Aktivator und die andere Komponente aus einer radikalbildenden Substanz (auch Härter oder Initiator genannt)und dem zu polymerisierenden Monomer. Nach Durchmischen oder zumindest Kontaktieren der beiden Komponenten und einer Aktivierung, die meist thermisch erfolgt, wird die radikalbildende Substanz durch den Aktivator in zwei Radikale aufgespalten und die Polymerisationsreaktion der zu polymerisierenden Monomere beginnt. Die Radikalkettenpolymerisation des Monomers findet anschließend bis zu einem Kettenabbruch statt und die Klebemasse härtet aus, wodurch eine dauerhafte Verklebung der zu verklebenden Teile erreicht wird.

So beschreibt die JP H02 263880 einen Flüssigkleber auf zwei-Komponenten-Basis, wobei jede Komponente funktionelle (Meth)Acrylatmonomere umfasst, und die eine der Komponenten organische Peroxide und die andere einen Härtungsbeschleuniger. Die Vermischung der Komponenten führt zu einer Reaktion der reaktiven Bestandteile. Zwei-Komponenten-Klebstoffe in Filmform werden nicht offenbart.

Nachteil derartiger flüssiger 2-Komponenten-Polymerisationsklebesysteme ist, dass ihre Anwendung oft unsauber erfolgt, da die beiden Komponenten meist flüssig bis pastös auf die zu verklebenden Teile aufgetragen werden müssen. Dies ist vor allem bei großflächigen Verklebungen und/oder bei solchen Anwendungen problematisch, bei denen die Oberflächen uneben, z.B. geneigt, sind. Außerdem erfolgt die Aktivierung des Klebstoffsystems in der Regel bei erhöhten Temperaturen, was für empfindliche Substrate, wie z.B. eloxiertes Aluminium, problematisch sein kann. Ein weiterer Nachteil derartiger Systeme ist, dass lange Aushärtezeiten die Anwendung einschränken können und die Lagerstabilität der beiden Komponenten kritisch sein kann. Darüber hinaus gehen herkömmliche 2-Komponenten-Polymerisationsklebesysteme nach vollständigem Aushärten häufig mit Problemen einher, die erst bei Erschütterungen sichtbar werden. So kann es bei den Systemen des Standes der Technik im Bereich der Verklebungen durch starke Erschütterungen zu Rissen oder Brüchen kommen.

Die DE 297 06 115 U beschreibt reaktive, zweilagige Doppelklebebänder mit einer Klebekomponente A und einer Klebekomponente B, bei denen die Reaktion bei Inkontaktbringen der Komponenten startet. Nähere Angaben zu Klebemassen sind nicht gemacht.

### Aufgabe der vorliegenden Erfindung

Der vorliegenden Erfindung liegt insofern die Aufgabe zu Grunde, ein verbessertes, reaktives 2-Komponentenklebstoffsystem bereitzustellen. Vor diesem Hintergrund schlägt die vorliegende Erfindung ein reaktives 2-Komponentenklebstoffsystem zur Verklebung von diversen Materialien vor, um die oben beschriebenen Probleme der bekannten, flüssigen 2-Komponentenklebstoffsysteme zu umgehen.

Insbesondere wird ein reaktives 2-Komponentenklebstoffsystem bereitgestellt, das einfach zu handhaben ist und idealerweise bereits eine Haftklebrigkeit aufweist, so dass es zu keinem Verrutschen bei der Applikation auf die zu verklebenden Substrate kommt und eine exaktere Verklebung als bei den flüssigen 2-Komponenten-Polymerisationsklebesystemen, die im Stand der Technik bekannt sind, ermöglicht wird.

### Zusammenfassung der Erfindung

Die vorliegende Erfindung betrifft ein reaktives Klebstoffsystem, umfassend mindestens zwei reaktive Klebstoffkomponenten A und B, wobei die erste Klebstoffkomponente A mindestens ein reaktives Monomer oder Reaktivharz (a) und einen Radikalinitiator (c) umfasst und die zweite Klebstoffkomponente B mindestens ein reaktives Monomer oder Reaktivharz (a) und einen Aktivator (b) umfasst, wobei der Aktivator (b) einen Mangan(II)-Komplex, Eisen(II)-Komplex oder Kobalt(II)-Komplex umfasst, jeweils mit einer Verbindung als Ligand, ausgewählt aus Porphyrin, Porphyrazin oder Phthalocyanin oder Verbindungen mit Porphyrin-, Porohyrazin- oder Phthalocyanin-Ringstruktur, die Fluor-, Chlor-, Brom-, Iod-, Methyl-, Ethyl-, Isopropyl-, Butyl-, tert-Butyl-, OH-, NH₂- oder NO₂-Substituenten tragen.

Erfindungsgemäß wird das reaktive Klebstoffsystem in Filmform bereitgestellt. Dies wird erreicht, indem das reaktive Klebstoffsystem die beiden reaktiven Klebstoffkomponenten A und B in Filmform, also als Klebstofffilme, umfasst.

Besonders bevorzugt wird erfindungsgemäß Mangan(II)-phthalocyanin, Eisen(II)-phthalocyanin oder Kobalt(II)-phthalocyanin als Aktivator (b) in den hier beschriebenen reaktiven Klebstoffsystemen eingesetzt.

Dieses reaktive Klebstoffsystem ist als 2-Komponenten-Polymerisationsklebstoffsystem in Filmform zur verbesserten Verklebung von diversen Materialien geeignet.

### Detaillierte Beschreibung der Erfindung

Erfindungsgemäß wird die oben beschriebene Aufgabe über ein reaktives Klebstoffsystem gelöst, das zwei reaktive Klebstoffkomponentenals Klebstofffilme umfasst, das dadurch gekennzeichnet ist, dass ein spezieller Aktivator (b), nämlich ein Mangan(II)-Komplex, ein Eisen(II)-Komplex oder ein Kobalt(II)-Komplex, jeweils mit den vorstehend definierten Liganden, eingesetzt wird. Besonders bevorzugt wird Mangan(II)-phthalocyanin, Eisen(II)-phthalocyanin oder Kobalt(II)-phthalocyanin eingesetzt.

Das erfindungsgemäße Klebstofffilmsystem umfasst in einer Ausführungsform mindestens zwei reaktive Klebstoffkomponenten bzw. Klebstofffilme A und B, wobei die erste Klebstoffkomponente A mindestens ein reaktives Monomer oder Reaktivharz (a), einen Radikalinitiator (c) und eine polymere Filmbildner-Matrix (d) umfasst und die zweite Klebstoffkomponente mindestens ein reaktives Monomer oder Reaktivharz (a), einen Aktivator (b) und eine polymere Filmbildner-Matrix (d) umfasst und wobei der Aktivator (b) einen Mangan(II)-Komplex, Eisen(II)-Komplex oder Kobalt(II)-Komplex umfasst, jeweils mit einer Verbindung als Ligand, ausgewählt aus Porphyrin, Porphyrazin oder Phthalocyanin oder Verbindungen mit Porphyrin-, Porohyrazin- oder Phthalocyanin-Ringstruktur, die Fluor-, Chlor-, Brom-, lod-, Methyl-, Ethyl-, Isopropyl-, Butyl-, tert-Butyl-, OH-, NH₂- oder NO₂-Substituenten tragen.

In den zuvor beschriebenen erfindungsgemäßen Ausführungsformen wird besonders bevorzugt Mangan(II)-phthalocyanin, Eisen(II)-phthalocyanin oder Kobalt(II)-phthalocyanin als Aktivator (b) eingesetzt.

In einer weiteren erfindungsgemäßen Ausführungsform wird ein Verfahren zur Herstellung eines erfindungsgemäßen, reaktiven Klebstoffsystems in Filmform offenbart, wobei das Verfahren die folgenden Schritte umfasst:
1. Auflösen und/oder Feinverteilen der Inhaltsstoffe in einem oder mehreren Lösemittel(n) und/oder Wasser;
2. Mischen der aufgelösten oder feinverteilten Inhaltsstoffe;
3. Beschichten eines Trennliners oder
   - papiers, eines Trägermaterials oder eines Haftklebstoffs mit der Mischung aufgelöster oder verteilter Inhaltsstoffe nach Schritt 2;
4. Verdunsten des Lösemittels und/oder Wassers; und
5. Gegebenenfalls Aufwickeln der reaktiven Klebstoffkomponente zu einer Rolle;
wobei die Inhaltsstoffe
(A) mindestens ein reaktives Monomer (a), einen Radikalinitiator (b) und eine polymere Filmbildner-Matrix (d); oder
(B) mindestens ein reaktives Monomer (a), einen Aktivator (b) und eine polymere Filmbildner-Matrix (d);
sowie gegebenenfalls weitere Additive und/oder Hilfsstoffe umfassen.

In einer anderen erfindungsgemäßen Ausführungsform wird ein Kit zur Bereitstellung des erfindungsgemäßen 2-Komponentenklebstoffsystems bereitgestellt.

In einer weiteren erfindungsgemäßen Ausführungsform wird ein Verbundkörper offenbart, der durch das erfindungsgemäße, reaktive Klebstoffsystem oder durch das erfindungsgemäße Kit verbunden ist.

Nachfolgend werden die Komponenten der erfindungsgemäßen Klebstoffkomponenten, nämlich der Klebstofffilme, bzw. des erfindungsgemäßen Klebstoffsystems im Detail beschrieben.

### Reaktives Monomer oder Reaktivharz (a)

Wie hierin verwendet, soll das reaktive Monomer oder Reaktivharz (a) für ein Monomer oder Harz stehen, das insbesondere zu einer Radikalkettenpolymerisation in der Lage ist.

Erfindungsgemäß ist ein geeignetes, reaktives Monomer ausgewählt aus der Gruppe, bestehend aus Acrylsäure, Acrylsäureester, Methacrylsäure, Methacrylsäureester, Diacrylate, Dimethacrylate, Triacrylate, Trimethacrylate, höher funktionelle Acrylate, höher funktionelle Methacrylate, Vinylverbindungen und/oder oligomeren oder polymeren Verbindungen mit Kohlenstoff-Kohlenstoff-Doppelbindungen.

In einer bevorzugten Ausführungsform ist das reaktive Monomer ein oder mehrere Vertreter, ausgewählt aus der Gruppe, bestehend aus: Methylmethacrylat (CAS-Nr. 80-62-6), Methacrylsäure (CAS-Nr. 79-41-4), Cyclohexylmethacrylat (CAS-Nr. 101-43-9), Tetrahydrofurfuryl-methacrylat (CAS-Nr. 2455-24-5), 2-Phenoxyethylmethacrylat (CAS-Nr. 10595-06-9), Hydroxyalkylmethacrylate, insbesondere 2-Hydroxyethylmethacrylat (CAS-Nr. 868-77-9), 2-Hydroxypropylmethacrylat (CAS-Nr. 923-26-2 und 27813-02-1), 4-Hydroxybutylmethacrylat (CAS-Nr. 29008-35-3 und 997-46-6), Di-(ethylenglykol)methylethermethacrylat (CAS-Nr. 45103-58-0) und/oder Ethylenglykoldimethacrylat (CAS-Nr. 97-90-5).

In einer weiteren bevorzugten, erfindungsgemäßen Ausführungsform enthält die reaktive Klebstoffkomponente eine Mischung von Cyclohexylmethacrylat, Tetrahydrofurfurylmethacrylat, Methacrylsäure und Ethylenglykoldimethacrylat als zu polymerisierende, reaktive Monomere.

In einer weiteren bevorzugten, erfindungsgemäßen Ausführungsform enthält die reaktive Klebstoffkomponente eine Mischung von 2-Phenoxyethylmethacrylat, 2-Hydroxyethylmethacrylat, 2-Hydroxypropylmethacrylat und Ethylenglykoldimethacrylat als zu polymerisierende, reaktive Monomere.

In einer weiteren bevorzugten, erfindungsgemäßen Ausführungsform enthält die reaktive Klebstoffkomponente eine Mischung von 2-Phenoxyethylmethacrylat, 2-Hydroxyethylmethacrylat und Ethylenglykoldimethacrylat als zu polymerisierende, reaktive Monomere.

In einer weiteren bevorzugten, erfindungsgemäßen Ausführungsform enthält die reaktive Klebstoffkomponente 2-Phenoxyethylmethacrylat als zu polymerisierendes, reaktives Monomer.

In einer weiteren bevorzugten, erfindungsgemäßen Ausführungsform enthält die reaktive Klebstoffkomponente eine Mischung von Methylmethacrylat, Methacrylsäure und Ethylenglykol-dimethacrylat als zu polymerisierende, reaktive Monomere.

In einer weiteren bevorzugten, erfindungsgemäßen Ausführungsform enthält die reaktive Klebstoffkomponente eine Mischung von 2-Phenoxyethylmethacrylat und Ethylenglykoldimethacrylat als zu polymerisierende, reaktive Monomere.

In einer weiteren bevorzugten, erfindungsgemäßen Ausführungsform enthält die reaktive Klebstoffkomponente eine Mischung von Di-(ethylenglykol)methylethermethacrylat und Ethylenglykoldimethacrylat als zu polymerisierende, reaktive Monomere.

Als Reaktivharz(e) können oligomere mono-, di-, tri- und höher funktionalisierte (Meth)acrylate ausgewählt werden. Sehr vorteilhaft werden diese im Gemisch mit zumindest einem reaktiven Monomer eingesetzt.

Jede dieser bevorzugten Ausführungsformen kann erfindungsgemäß mit einem thermoplastischen Polyurethan, wie z.B. Desmomelt 530®, als polymere Filmbildner-Matrix (d), wie nachfolgend beschrieben, kombiniert werden.

Die Menge des reaktiven Monomers/der reaktiven Monomere/des Reaktivharzes/der Reaktivharze liegt erfindungsgemäß im Bereich von etwa 20-80 Gew.%, bevorzugt etwa 40-60 Gew.%, bezogen auf die Gesamtmischung der Bestandteile der reaktiven Klebstoffkomponente. Am stärksten bevorzugt werden etwa 40-50 Gew.% des reaktiven Monomers/der reaktiven Monomere/des Reaktivharzes/der Reaktivharze, bezogen auf die Gesamtmischung der Bestandteile der reaktiven Klebstoffkomponente, eingesetzt. Die Gesamtmischung der Bestandteile der reaktiven Klebstoffkomponente steht hier für die gesamte Menge der eingesetzten Komponenten, die die reaktiven Monomere oder Reaktivharze (a), den Aktivator (b), den Radikalinitiator (c), die polymere Filmbildner-Matrix (d) und/oder weiterer optional vorliegender Komponenten einschließen, die als Summe (in Gew.%) erhalten wird.

### Aktivator (b)

Wie hier verwendet, steht der Begriff Aktivator für eine Verbindung, die bereits bei sehr geringen Konzentrationen den Ablauf der Polymerisation erst ermöglicht oder beschleunigt. Aktivatoren können auch Beschleuniger oder Akzeleratoren genannt werden.

In der vorliegenden Erfindung wird der reaktiven Klebstoffkomponente Bfür den reaktiven Klebstofffilm B ein Aktivator zugesetzt, der eine Komplexverbindung mit einem Mangan-, Eisen- oder Kobalt-Ion als Zentralatom und einer Kohlenstoff-Stickstoff-Doppelbindungen enthaltenden Verbindung als Liganden umfasst, wobei diese Verbindung ausgewählt ist aus Porphyrin, Porphyrazin, oder Phthalocyanin oder aus Verbindungen mit Porphyrin-, Porohyrazin- oder Phthalocyanin-Ringstruktur, die Fluor-, Chlor-, Brom-, lod-, Mthyl-, Ethyl-, Isopropyl-, Butyl-, tert-Butyl-, OH-, NH₂- oder NO₂-Substituenten tragen. Die Kohlenstoff-Stickstoff-Doppelbindungen enthaltende Verbindung liegt dabei in der Komplexverbindung anionisch vor. Das Mangan-, Eisen- oder Kobalt-Ion ist in der Komplexverbindung zweifach positiv geladen, während die Kohlenstoff-Stickstoff-Doppelbindungen enthaltende Verbindung zweifach negativ geladen ist. Das Mangan-, Eisen- oder Kobalt-Ion ersetzt in der Komplexverbindung jeweils zwei Wasserstoff-Atome, die der Ligand vor der Umsetzung zur Komplexverbindung an den Stickstoff-Atomen getragen hat.

Erfindungsgemäß hat der Ligand eine cyclische Struktur, nämlich eine Porphyrin-, Porphyrazin- oder Phthalocyanin-Ringstruktur. Diese Strukturen sind als Gerüststrukturen zu verstehen. Die Liganden können gegebenenfalls Substituenten anstelle der an Kohlenstoff-Atome gebundenen H-Atome tragen. In diesem Fall spricht man von Derivaten dieser Verbindungen. Geeignete Substituenten sind ausgewählt aus der Gruppe, bestehend aus Fluor, Chlor, Brom, Iod, Methyl, Ethyl, Propyl, Isopropyl, Butyl, tert.-Butyl, - OH, -NH₂, -NO₂.

Ein besonders geeigneter Aktivator umfasst Eisen(II)-phthalocyanin (CAS-Nr. 132-16-1).

Die Menge des Aktivators liegt erfindungsgemäß im Bereich von größer 0 bis etwa 10 Gew.%, bevorzugt etwa 0,1-5,0 Gew.%. Am stärksten bevorzugt werden etwa 0,2-3,0 Gew.%, noch bevorzugter 0,5-2,0 Gew.% Aktivator, bezogen auf die Gesamtmischung der Bestandteile der reaktiven Klebstoffkomponente, eingesetzt. Die Gesamtmischung der Bestandteile der reaktiven Klebstoffkomponente steht hier für die gesamte Menge der eingesetzten Komponenten, die die reaktiven Monomere oder Reaktivharze (a), den Aktivator (b), den Radikalinitiator (c), die polymere Filmbildner-Matrix (d) und/oder weitere optional vorliegende Komponenten einschließen, die als Summe (in Gew.%) erhalten wird.

### Radikalinitiator (c)

Wie hierin verwendet, steht der Begriff Initiator, insbesondere Radikalinitiator bzw. radikalbildende Substanz (oder auch Härter) für eine Verbindung, die eine Polymerisationsreaktion oder Vernetzung des Klebstoffs einleiten kann. Der Initiator, insbesondere Radikalinitiator nimmt allerdings zu einem sehr geringen Anteil am Reaktionsgeschehen teil und bildet folglich keinen die Eigenschaften der Verklebung bestimmenden Polymeranteil.

In der vorliegenden Erfindung wird der mindestens einen ersten, reaktiven Klebstoffkomponente des Klebstoffsystems ein Initiator, insbesondere Radikalinitiator, zugesetzt.

Bevorzugt werden Radikalinitiatoren. Es können alle im Stand der Technik bekannten Radikalinitiatoren eingesetzt werden. Bevorzugte Radikalinitiatoren sind Peroxide, Hydroperoxide und Azoverbindungen.

In einer besonders bevorzugten, erfindungsgemäßen Ausführungsform ist der Radikalinitiator ein organisches Peroxid oder Hydroperoxid. Besonders bevorzugt ist α,α-Dimethylbenzylhydroperoxid, das auch als Cumolhydroperoxid (CAS-Nr. 80-15-9) bekannt ist. Weiterhin bevorzugt sind Diisopropylbenzol-hydroperoxid (CAS-Nr. 26762-93-6), p-Menthanhydroperoxid (CAS-Nr. 26762-92-5) sowie 1,1,3,3-Tetramethylbutyl-hydroperoxid (CAS-Nr. 5809-08-5).

Die Menge des Radikalinitiators liegt erfindungsgemäß im Bereich von etwa 3-30 Gew.%, bevorzugt etwa 8-15 Gew.%, bezogen auf die Gesamtmischung der Bestandteile der reaktiven Klebstoffkomponente. Am stärksten bevorzugt werden etwa 9-11 Gew.% Radikalinitiator, bezogen auf die Gesamtmischung der Bestandteile der reaktiven Klebstoffkomponente, eingesetzt. Die Gesamtmischung der Bestandteile der reaktiven Klebstoffkomponente steht hier für die gesamte Menge der eingesetzten Komponenten, die die reaktiven Monomere oder Reaktivharze (a), den Aktivator (b), den Radikalinitiator (c), die polymere Filmbildner-Matrix (d) und/oder weiterer optional vorliegender Komponenten einschließen, die als Summe (in Gew.%) erhalten wird.

### Polymere Filmbildner-Matrix (d)

Die erfindungsgemäßen Klebstoffkomponenten umfassen eine Matrix, die nachfolgend polymere Filmbildner-Matrix genannt wird, in der die reaktiven, zu polymerisierenden Monomere und/oder Reaktivharze enthalten sind. Derartige Klebstoffkomponenten liegen in Filmform vor und werden deshalb auch Klebstofffilme genannt. Aufgabe dieser Matrix ist, ein inertes Grundgerüst für die reaktiven Monomere und/oder Klebharze zu bilden, so dass diese nicht - wie im Stand der Technik - flüssig vorliegen und damit die genannten Probleme auslösen können, sondern in einem Film oder einer Folie eingelagert sind. Auf diese Art und Weise wird eine einfachere Handhabung gewährleistet.

Inert bedeutet in diesem Zusammenhang, dass die reaktiven Monomere und/oder Reaktivharze unter geeignet gewählten Bedingungen (z. B. bei ausreichend geringen Temperaturen) im Wesentlichen nicht mit der polymeren Filmbildner-Matrix reagieren.

Geeignete Filmbildner-Matrices zur Verwendung in der vorliegenden Erfindung sind vorzugsweise ausgewählt aus der folgenden Liste: ein thermoplastisches Polymer, wie z.B. ein Polyester bzw. Copolyester, ein Polyamid bzw. Copolyamid, ein Polyacrylsäureester, ein Acrylsäureester-Copolymer, ein Polymethacrylsäureester, ein Methacrylsäureester-Copolymer, thermoplastische Polyurethane sowie chemisch oder physikalisch vernetzte Stoffe der zuvor genannten Verbindungen. Darüber hinaus können auch Blends aus verschiedenen thermoplastischen Polymeren eingesetzt werden.

Weiterhin sind auch Elastomere und thermoplastische Elastomere alleinig oder im Gemisch als polymere Filmbildner-Matrix denkbar. Bevorzugt werden thermoplastische Polymere, insbesondere semikristalline.

Besonders bevorzugt sind thermoplastische Polymere mit Erweichungstemperaturen kleiner als 100°C. In diesem Zusammenhang steht der Begriff Erweichungspunkt für die Temperatur, ab der das thermoplastische Granulat mit sich selbst verklebt. Wenn es sich bei dem Bestandteil der polymeren Filmbildner-Matrix um ein semikristallines thermoplastisches Polymer handelt, dann weist es sehr bevorzugt neben seiner Erweichungstemperatur (die mit dem Schmelzen der Kristallite zusammenhängt) eine Glasübergangstemperatur von höchstens 25 °C, bevorzugt höchstens 0 °C auf.

In einer bevorzugten, erfindungsgemäßen Ausführungsform wird ein thermoplastisches Polyurethan eingesetzt. Vorzugsweise besitzt das thermoplastische Polyurethan eine Erweichungstemperatur von kleiner als 100°C, insbesondere kleiner als 80°C.

In einer besonders bevorzugten, erfindungsgemäßen Ausführungsform wird Desmomelt 530® als polymere Filmbildner-Matrix eingesetzt, das im Handel bei der Bayer Material Science AG, 51358 Leverkusen, Deutschland, erhältlich ist. Desmomelt 530® ist ein hydroxyl-terminiertes, weitgehend lineares, thermoplastisches, stark kristallisierendes Polyurethan-Elastomer.

Die Menge der polymeren Filmbildner-Matrix liegt erfindungsgemäß im Bereich von etwa 20-80 Gew.%, bevorzugt etwa 30-50 Gew.%, bezogen auf die Gesamtmischung der Bestandteile der reaktiven Klebstoffkomponente. Am stärksten bevorzugt werden 35-45 Gew.%, bevorzugt etwa 40 Gew.% der polymeren Filmbildner-Matrix, bezogen auf die Gesamtmischung der Bestandteile der reaktiven Klebstoffkomponente, eingesetzt. Die Gesamtmischung der Bestandteile der reaktiven Klebstoffkomponente steht hier für die gesamte Menge der eingesetzten Komponenten, die die reaktiven Monomere oder Reaktivharze (a), den Aktivator (b), den Radikalinitiator (c), die polymere Filmbildner-Matrix (d) und/oder weiterer optional vorliegender Komponenten einschließen, die als Summe (in Gew.%) erhalten wird.

### Vernetzer

Wie hier verwendet, steht der Begriff Vernetzer für chemische Verbindungen, die imstande sind, lineare Molekülketten mit reaktionsfähigen, funktionellen Gruppen zu versehen, damit sich aus den zweidimensionalen Strukturen über Ausbildung intermolekularer Brücken dreidimensional-vernetzte Strukturen bilden können.

Typische Beispiele für Vernetzer sind chemische Verbindungen, die innerhalb des Moleküls oder an den beiden Molekülenden zwei oder mehr gleiche oder unterschiedliche funktionelle Gruppen aufweisen und folglich Moleküle gleicher oder auch unterschiedlicher Strukturen miteinander vernetzen können. Außerdem kann ein Vernetzer mit dem reaktiven Monomer oder Reaktivharz, wie oben definiert, reagieren, ohne dass es dabei zu einer Polymerisation im eigentlichen Sinne kommt. Denn im Gegensatz zum Aktivator, wie oben beschrieben, kann ein Vernetzer in das Polymer-Netzwerk eingebaut werden.

In einer besonders bevorzugten, erfindungsgemäßen Ausführungsform wird Ethylenglykoldimethacrylat (CAS-Nr. 97-90-5) als Vernetzer und/oder reaktives Monomer eingesetzt (siehe oben).

Bevorzugte Vernetzer sind außerdem Diacrylate, Dimethacrylate, Triacrylate, Trimethacrylate, höher funktionelle Acrylate und/oder höher funktionelle Methacrylate.

### Weitere Bestandteile der reaktiven Klebstoffkomponenten A und/oder B

Die reaktiven Klebstofffilme der vorliegenden Erfindung können gegebenenfalls weitere Additive und/oder Hilfsstoffe enthalten, die im Stand der Technik bekannt sind. Hier sind beispielsweise Füllstoffe, Farbstoffe, Farbpigmente, Keimbildner, rheologische Additive, Blähmittel, klebverstärkende Additive (Haftvermittler, Tackifier-Harze, Klebstoffe, Haftklebstoffe), Compoundierungsmittel, Weichmacher und/oder Alterungs-, Licht- und UV-Schutzmittel, zum Beispiel in Form von primären und sekundären Antioxidantien zu nennen.

### Reaktive Klebstoffkomponenten A und B

In einer bevorzugten, erfindungsgemäßen Ausführungsform umfasst die mindestens eine erste Klebstoffkomponente A eine Mischung der folgenden Bestandteile: thermoplastisches Polyurethan, insbesondere Desmomelt 530®, 2-Phenoxyethylmethacrylat, 2-Hydroxyethylmethacrylat, 2-Hydroxypropylmethacrylat, Ethylenglykoldimethacrylat und Cumolhydroperoxid.

In einer weiteren bevorzugten, erfindungsgemäßen Ausführungsform umfasst die mindestens eine erste Klebstoffkomponente A eine Mischung der folgenden Bestandteile: thermoplastisches Polyurethan, insbesondere Desmomelt 530®, 2-Phenoxyethylmethacrylat, 2-Hydroxyethylmethacrylat, Ethylenglykoldimethacrylat und Cumolhydroperoxid.

In einer weiteren bevorzugten, erfindungsgemäßen Ausführungsform umfasst die mindestens eine erste Klebstoffkomponente A eine Mischung der folgenden Bestandteile: Phenoxyethylmethacrylat und Cumolhydroperoxid.

Die erste Klebstoffkomponente A enthält in einer bevorzugten Ausführungsform (i) 20-80 Gew. % mindestens eines reaktiven Monomers oder Reaktivharzes (a) und 2-30 Gew. % Radikalinitiator (c), vorzugsweise 40-60 Gew. % mindestens eines reaktiven Monomers oder Reaktivharzes (a) und 8-15 Gew. % Radikalinitiator (c) oder (ii) 20-80 Gew. % polymere Filmbildner-Matrix (d), 20-80 Gew. % mindestens eines reaktiven Monomers oder Reaktivharzes (a) und 2-30 Gew. % Radikalinitiator (c), vorzugsweise 30-50 Gew. % polymere Filmbildner-Matrix (d), 40-60 Gew. % mindestens eines reaktiven Monomers oder Reaktivharzes (a) und 8-15 Gew. % Radikalinitiator (c), bezogen auf die Gesamtmischung der Bestandteile der reaktiven Klebstoffkomponente. Die Gesamtmischung der Bestandteile der reaktiven Klebstoffkomponente steht hier für die gesamte Menge der eingesetzten Komponenten, die die reaktiven Monomere oder Reaktivharze (a), den Aktivator (b), den Radikalinitiator (c), die polymere Filmbildner-Matrix (d) und/oder weiterer optional vorliegender Komponenten einschließen, die als Summe (in Gew.%) erhalten wird.

In einer bevorzugten, erfindungsgemäßen Ausführungsform umfasst die mindestens eine zweite Klebstoffkomponente B eine Mischung der folgenden Bestandteile: thermoplastisches Polyurethan, insbesondere Desmomelt 530®, 2-Phenoxyethylmethacrylat, 2-Hydroxyethylmethacrylat, 2-Hydroxypropylmethacrylat, Ethylenglykoldimethacrylat und Eisen(II)-phthalocyanin.

In einer weiteren bevorzugten, erfindungsgemäßen Ausführungsform umfasst die mindestens eine zweite Klebstoffkomponente B eine Mischung der folgenden Bestandteile: thermoplastisches Polyurethan, insbesondere Desmomelt 530®, 2-Phenoxyethylmethacrylat, 2-Hydroxyethylmethacrylat, Ethylenglykoldimethacrylat und Eisen(II)-phthalocyanin.

Die zweite Klebstoffkomponente enthält in einer bevorzugten Ausführungsform (i) 0,1-5 Gew. % Aktivator (b), vorzugsweise 0,5-2 Gew. % Aktivator (b) oder (ii) 20-80 Gew. % mindestens eines reaktiven Monomers oder Reaktivharzes (a) und 0,1-5 Gew. % Aktivator (b), vorzugsweise 40-60 Gew. % mindestens eines reaktiven Monomers oder Reaktivharzes (a) und 0,5-2 Gew. % Aktivator (b) oder (iii) 20-80 Gew. % polymere Filmbildner-Matrix (d), 20-80 Gew. % mindestens eines reaktiven Monomers oder Reaktivharzes (a) und 0,1-5 Gew. % Aktivator (b), vorzugsweise 30-50 Gew. % polymere Filmbildner-Matrix (d), 40-60 Gew. % mindestens eines reaktiven Monomers oder Reaktivharzes (a) und 0,5-2 Gew. % Aktivator (b), bezogen auf die Gesamtmischung der Bestandteile der reaktiven Klebstoffkomponente. Die Gesamtmischung der Bestandteile der reaktiven Klebstoffkomponente steht hier für die gesamte Menge der eingesetzten Komponenten, die die reaktiven Monomere oder Reaktivharze (a), den Aktivator (b), den Radikalinitiator (c), die polymere Filmbildner-Matrix (d) und/oder weiterer optional vorliegender Komponenten einschließen, die als Summe (in Gew.%) erhalten wird.

Die erfindungsgemäßen, reaktiven Klebstoffkomponenten A und/oder B in Filmform besitzen in der Regel eine Schichtdicke im Bereich von etwa 20-200 µm, bevorzugt etwa 30-100 µm, bevorzugter etwa 40-60 µm und besonders bevorzugt etwa 50 µm. Zur Herstellung größerer Schichtdicken kann es von Vorteil sein, mehrere Klebstofffilmschichten zusammen zu laminieren.

Zudem sind die erfindungsgemäßen, reaktiven Klebstoffkomponenten A und B dadurch gekennzeichnet, dass sie bevorzugt haftklebrige Eigenschaften besitzen. Als haftklebrige Stoffe sind gemäß Römpp solche viskoelastischen Klebstoffe definiert (Römpp Online 2013, Dokumentkennung RD-08-00162), deren abgebundener, trockener Film bei Raumtemperatur permanent klebrig ist und klebfähig bleibt. Die Haftklebung erfolgt durch leichten Anpressdruck sofort auf fast allen Substraten. Als leichter Anpressdruck ist hier ein Anpressdruck von größer 0 bar, der für eine Dauer von größer 0 Sekunden ausgeübt wird, gemeint.

### Reaktives Klebstoffsystem

Erfindungsgemäß werden die erste und die zweite reaktive Klebstoffkomponente, wie oben beschrieben, jeweils in Filmform für ein reaktives Klebstoffsystem eingesetzt, welches dadurch gekennzeichnet ist, dass die erste reaktive Klebstoffkomponente A mindestens ein reaktives Monomer oder Reaktivharz (a) und einen Radikalinitiator (c) umfasst und die zweite Klebstoffkomponente B mindestens ein reaktives Monomer oder Reaktivharz (a) und einen Aktivator (b) umfasst und wobei der Aktivator (b) einen Mangan(II)-Komplex, Eisen(II)-Komplex oder Kobalt(II)-Komplex umfasst, jeweils mit einer Verbindung als Ligand, ausgewählt aus Porphyrin, Porphyrazin oder Phthalocyanin oder Verbindungen mit Porphyrin-, Porohyrazin- oder Phthalocyanin-Ringstruktur, die Fluor-, Chlor-, Brom-, lod-, Mthyl-, Ethyl-, Isopropyl-, Butyl-, tert-Butyl-, OH-, NH₂- oder NO₂-Substituenten tragen.

Außerdem wird erfindungsgemäß ein reaktives Klebstoffsystem bereitgestellt, umfassend zwei oder mehr erste Klebstoffkomponenten A bzw. zweite Klebstoffkomponenten B, wie oben definiert, und gegebenenfalls weitere Träger, Trennpapiere und/oder Trennliner, wobei die zwei oder mehr ersten Klebstoffkomponenten A bzw. zweiten Klebstoffkomponenten B jeweils abwechselnd vorliegen.

Die erste und die zweite reaktive Klebstoffkomponente A und B vernetzen und härten aus, sobald sie unter mäßigem Druck, insbesondere 0,5 bis 3 bar, bei Raumtemperatur (23°C) flächig in Kontakt gebracht werden. Wahlweise sind höhere bzw. niedrigere Temperaturen auch möglich. Der genannte mäßige Druck soll insbesondere von Hand zu erreichen sein. Die Kontaktzeit beträgt erfindungsgemäß bei Raumtemperatur einige Sekunden bis einige Minuten, bevorzugt 10 bis 60 Sekunden. Der Druck kann maschinell oder manuell aufgebracht werden.

Werden die beiden reaktiven Klebstoffkomponenten A und B, wie oben beschrieben, zuvor auf den zu verklebenden Substraten aufgebracht, kommt durch die oben beschriebene Vernetzung eine dauerhafte Verklebung der Substrate zu Stande. Alternativ kann zunächst auch Klebstoffkomponente A auf das erste zu verklebende Substrat aufgebracht und auf Klebstoffkomponente A Klebstoffkomponente B aufgebracht werden. Anschließend wird dann das zweite zu verklebende Substrat auf Klebstoffkomponente B aufgebracht.

Weiterhin kann das reaktive Klebstoffsystem der Erfindung weitere Filme, Schichten, Klebstoffe sowie permanente und oder temporäre Träger umfassen.

Geeignete Trägermaterialien sind einem Fachmann auf dem Gebiet bekannt. Beispielsweise können als permanente Träger Folien (Polyester, PET, PE, PP, BOPP, PVC, Polyimide), Vliese, Schäume, Gewebe und/oder Gewebefolien verwendet werden. Temporäre Träger sollten mit einer Trennschicht versehen sein, wobei die Trennschicht in der Regel aus einem Silikontrennlack oder einem fluorierten Trennlack besteht oder polyolefinischen Charakter (HDPE, LDPE) aufweist.

Gegebenenfalls kann es notwendig sein, dass die Oberflächen der zu verklebenden Substrate durch ein physikalisches, chemisches und/oder physikalisch-chemisches Verfahren vorbehandelt werden. Hier ist beispielsweise das Aufbringen eines Primers oder einer Haftvermittlerzusammensetzung vorteilhaft.

### Substrate

Geeignete Substrate, die zur Verklebung über das erfindungsgemäße, reaktive Klebstoffsystem geeignet sind, sind Metalle, Glas, Holz, Beton, Stein, Keramik, Textil und/oder Kunststoffe. Die zu verklebenden Substrate können gleich oder verschieden sein.

In einer bevorzugten Ausführungsform wird das erfindungsgemäße, reaktive Klebstoffsystem zur Verklebung von Metallen, Glas und Kunststoffen eingesetzt. In einer besonders bevorzugten, erfindungsgemäßen Ausführungsform werden Polycarbonate und eloxiertes Aluminium verklebt.

Die zu verklebenden Metallsubstrate können generell aus allen geläufigen Metallen und Metalllegierungen gefertigt werden. Bevorzugt kommen Metalle, wie zum Beispiel Aluminium, Edelstahl, Stahl, Magnesium, Zink, Nickel, Messing, Kupfer, Titan, eisenhaltige Metalle und Legierungen zum Einsatz. Die zu verklebenden Teile können außerdem aus unterschiedlichen Metallen aufgebaut sein.

Geeignete Kunststoffsubstrate sind beispielsweise Acrylnitril-Butadien-Styrol-Copolymere (ABS), Polycarbonate (PC), ABS/PC-Blends, PMMA, Polyamide, Glasfaserverstärkte Polyamide, Polyvinylchlorid, Polyvinylenfluorid, Cellulose Acetat, Cycloolefin-Copolymere, Flüssigkristallpolymere (LCP), Polylactid, Polyetherketone, Polyetherimid, Polyethersulfon, Polymethacrylmethylimid, Polymethylpenten, Polyphenylether, Polyphenylensulfid, Polyphthalamid, Polyurethane, Polyvinylacetat, Styrol Acrylnitril Copolymere, Polyacrylate bzw. Polymethacrylate, Polyoxymethylen, Acrylester-Styrol-Acrylnitril Copolymere, Polyethylen, Polystyrol, Polypropylen und/oder Polyester, wie z.B. Polybutylenterephthalate (PBT) und/oder Polyethylenterephthalat (PET).

Substrate können lackiert, bedruckt, bedampft oder besputtert sein.

Die zu verklebenden Substrate können jede beliebige Form annehmen, die für die Verwendung des resultierenden Verbundkörpers erforderlich ist. In der einfachsten Form sind die Substrate eben. Außerdem können auch dreidimensionale Substrate, die z.B. geneigt sind, mit dem erfindungsgemäßen, reaktiven Klebstoffsystem verklebt werden. Die zu verklebenden Substrate können auch die verschiedensten Funktionen einnehmen, wie zum Beispiel Gehäuse, Sichtfenster, Versteifungselemente, etc.

### Verfahren zur Herstellung einer reaktiven Klebstoffkomponente in Filmform

Die erfindungsgemäßen, reaktiven Klebstofffilme (Klebstoffkomponenten in Filmform) werden durch das nachfolgend beschriebene Verfahren hergestellt:
In einem ersten Schritt werden die Inhaltsstoffe in einem oder mehreren Lösemittel(n) und/oder Wasser gelöst bzw. fein verteilt. Alternativ ist kein Lösemittel und/oder Wasser notwendig, da die Inhaltsstoffe bereits vollständig ineinander löslich sind (ggf. unter Einwirkung von Wärme und/oder Scherung). Geeignete Lösemittel sind im Stand der Technik bekannt, wobei bevorzugt Lösemittel eingesetzt werden, in denen mindestens einer der Inhaltsstoffe eine gute Löslichkeit aufweist. Besonders bevorzugt ist Aceton.

Wie hierin verwendet, umfasst der Begriff Inhaltsstoff entweder mindestens ein reaktives Monomer (a), einen Radikalinitiator (b) und eine polymere Filmbildner-Matrix (d) oder mindestens ein reaktives Monomer (a), einen Aktivator (b) und eine polymere Filmbildner-Matrix (d) sowie gegebenenfalls weitere Additive und/oder Hilfsstoffe, wie oben definiert.

Anschließend werden die aufgelösten oder fein verteilten Inhaltsstoffe in einem zweiten Schritt vermischt. Zur Herstellung der Mischung werden übliche Rührgeräte eingesetzt. Gegebenenfalls wird die Lösung zudem erwärmt. Ggf. werden die Inhaltsstoffe gleichzeitig aufgelöst bzw. feinverteilt und vermischt.
Der erste Schritt und der zweite Schritt können auch in einem Schritt erfolgen, die Inhaltsstoffe also gleichzeitig aufgelöst und/oder feinverteilt werden.

Daraufhin wird in einem dritten Schritt ein Trennpapier, ein Trägermaterial oder ein Haftklebstoff mit der Mischung der aufgelösten bzw. fein verteilten Inhaltsstoffe nach Schritt 2 beschichtet. Die Beschichtung erfolgt nach den üblichen Techniken, die im Stand der Technik bekannt sind.

Nach der Beschichtung wird das Lösemittel in einem vierten Schritt durch Abdampfen entfernt.

Gegebenenfalls kann der reaktive Klebstofffilm in einem weiteren Schritt zu einer Rolle aufgewickelt werden.

Zur Lagerung werden die erfindungsgemäßen, reaktiven Klebstofffilme mit einem Trennliner oder -papier abgedeckt.

Alternativ werden die erfindungsgemäßen, reaktiven Klebstofffilme lösungsmittel- und wasserfrei durch Extrusion, Hotmeltdüsenbeschichtung oder Kalandrieren hergestellt.

### Kit zur Bereitstellung des erfindungsgemäßen 2-Komponentenklebstoffsystems

Außerdem wird erfindungsgemäß ein Kit zur Bereitstellung eines reaktiven 2-Komponentenklebesystems in Filmform, bereitgestellt. Dieses Kit umfasst mindestens eine erste reaktive Klebstoffkomponente A, die einen Initiator, insbesondere Radikalinitiator, enthält, wie oben beschrieben, und mindestens eine zweite reaktive Klebstoffkomponente B, die einen Aktivator enthält, wie oben beschrieben.

Typischerweise wird das erfindungsgemäße Kit wie folgt verwendet:
Die mindestens eine erste Klebstoffkomponente A wird auf eine Oberfläche eines zu verklebenden Substrats aufgebracht. Außerdem wird die mindestens eine zweite Klebstoffkomponente B auf eine Oberfläche eines zweiten zu verklebenden Substrats aufgebracht. Klebstoffkomponente A und Klebstoffkomponente B werden in Kontakt gebracht und über Verpresszeiten im Bereich von einigen Sekunden bis zu mehreren Minuten bei Raumtemperatur (23°C) in Kontakt gelassen, wodurch die Polymerisationsreaktion startet und der Klebstoff aushärtet. Alternativ kann die mindestens eine zweite Klebstoffkomponente B auch auf die erste Klebstoffkomponente A aufgebracht werden und erst anschließend die Oberfläche eines zweiten zu verklebenden Substrats darauf aufgebracht werden.

Gegebenenfalls kann das oben beschriebene Verfahren wiederholt werden, um so eine Verklebung der Schichten Substrat-A-B-A-B-Substrat oder Substrat-B-A-B-Substrat oder Substrat-A-B-A-Substrat, etc. zu erreichen. Dies kann vorteilhaft sein, wenn unterschiedliche ausgeprägte Hafteigenschaften zwischen den zu verklebenden Substraten und den ersten und zweiten Klebstoffkomponenten A und B gegeben sind.

### Verbundkörper

Zuletzt wird erfindungsgemäß ein Verbundkörper bereitgestellt, der durch das erfindungsgemäße, reaktive Klebstoffsystem, wie oben definiert, oder durch das erfindungsgemäße Kit, wie oben definiert, verbunden ist.

### Experimenteller Teil

Die nachfolgenden Beispiele dienen zur Verdeutlichung der vorliegenden Erfindung, sollen aber keinesfalls als Einschränkung des Schutzbereichs verstanden werden.

### Herstellung der Lösung des filmbildenden Polymers

### PU-Lösung:

Eine 20%ige acetonische Lösung des filmbildenden Polymers wird hergestellt, indem zunächst 120 g Desmomelt 530® und 480 g Aceton in ein Schraubglas eingewogen werden und das Schraubglas verschlossen wird. Durch mehrtägiges Rollen des Schraubglases auf einer Rollbank wird das Desmomelt 530® vollständig in Lösung gebracht. Je nach Rollgeschwindigkeit dauert der Vorgang etwa ein bis sieben Tage. Alternativ kann die acetonische Lösung auch durch Rühren des Desmomelt 530®-Granulats in Aceton mit einem handelsüblichen Laborrührer hergestellt werden.

### Herstellung der reaktiven Komponenten A und B

### Komponente A1:

100,0 g 2-Phenoxyethylmethacrylat werden mit 10,0 g Cumolhydroperoxid mit einem handelsüblichen Laborrührer 10 Minuten gemischt, so dass eine homogene Mischung entsteht.

### Komponente B1:

Komponente B1 ist Eisen(II)-phthalocyanin in Pulverform (Qualität: Sigma-Aldrich, Reinheit ca. 90%).

### Komponente B2:

5,0 g Eisen(II)-phthalocyanin werden in 50,0 g Aceton 10 Minuten mit einem handelsüblichen Laborrührer gerührt, so dass eine Mischung mit gelösten Anteilen entsteht.

### Herstellung der reaktiven Komponenten A und B mit filmbildendem Polymer: Komponenten A-P und B-P

### Komponente A-P1:

150,0 g der 20%igen acetonischen Lösung von Desmomelt 530® (PU-Lösung) werden mit 25,3 g 2-Phenoxyethylmethacrylat, 19,0 g 2-Hydroxyethylmethacrylat, 12,7 g 2-Hydroxypropylmethacrylat, 3,0 g Ethylenglykoldimethacrylat und 10,0 g Cumolhydroperoxid mit einem handelsüblichen Laborrührer 10 Minuten gemischt, so dass eine homogene Mischung entsteht.

Die prozentuale Zusammensetzung der Komponente A-P1 ist in der folgenden Tabelle zusammen mit den beschriebenen Einwaagen aufgeführt:

| | **Komponente A-P1** | | | |
|---|---|---|---|---|
| | | Gew.% Feststoff* | Einwaage (g) mit Lösemittel | Gew.% mit Lösemittel |
| PU-Lösung | | 30,0 | 150,0 | 68,1 |
| 2-Phenoxyethylmethacrylat | | 25,3 | 25,3 | 11,5 |
| 2-Hydroxyethylmethacrylat | | 19,0 | 19,0 | 8,7 |
| 2-Hydroxypropylmethacrylat | | 12,7 | 12,7 | 5,8 |
| Ethylenglykoldimethacrylat | | 3,0 | 3,0 | 1,4 |
| Cumolhydroperoxid | | 10,0 | 10,0 | 4,5 |
| | Summe | 100,0 | 220,0 | 100,0 |

| | | | | |
|---|---|---|---|---|
| * Unter Feststoff werden hier alle Stoffe verstanden, die nicht Lösemittel sind. Lösemittel ist hier ausschließlich Aceton. | | | | |

### Komponente A-P2:

200,0 g der 20%igen acetonischen Lösung von Desmomelt 530® (PU-Lösung) werden mit 20,9 g 2-Phenoxyethylmethacrylat, 26,2 g 2-Hydroxyethylmethacrylat, 3,0 g Ethylenglykoldimethacrylat und 10,0 g Cumolhydroperoxid mit einem handelsüblichen Laborrührer 10 Minuten gemischt, so dass eine homogene Mischung entsteht.

Die prozentuale Zusammensetzung der Komponente A-P2 ist in der folgenden Tabelle zusammen mit den beschriebenen Einwaagen aufgeführt:

| | **Komponente A-P2** | | | |
|---|---|---|---|---|
| | | Gew.% Feststoff* | Einwaage (g) mit Lösemittel | Gew.% mit Lösemittel |
| PU-Lösung | | 40,0 | 200,0 | 76,8 |
| 2-Phenoxyethylmethacrylat | | 20,9 | 20,9 | 8,0 |
| 2-Hydroxyethylmethacrylat | | 26,2 | 26,2 | 10,1 |
| Ethylenglykoldimethacrylat | | 3,0 | 3,0 | 1,2 |
| Cumolhydroperoxid | | 10,0 | 10,0 | 3,9 |
| | Summe | 100,0 | 260,0 | 100,0 |

| | | | | |
|---|---|---|---|---|
| * Unter Feststoff werden hier alle Stoffe verstanden, die nicht Lösemittel sind. Lösemittel ist hier ausschließlich Aceton. | | | | |

### Komponente B-P1:

150,0 g der 20%igen acetonischen Lösung von Desmomelt 530® (PU-Lösung) werden mit 29,3 g 2-Phenoxyethylmethacrylat, 22,4 g 2-Hydroxyethylmethacrylat, 14,3 g 2-Hydroxypropylmethacrylat, 3,0 g Ethylenglykoldimethacrylat und 1,0 g Eisen(II)-phthalocyanin mit einem handelsüblichen Laborrührer 10 Minuten gemischt, so dass eine Mischung mit gelösten Anteilen entsteht.

Die prozentuale Zusammensetzung der Komponente B-P1 ist in der folgenden Tabelle zusammen mit den beschriebenen Einwaagen aufgeführt:

| | **Komponente B-P1** | | | |
|---|---|---|---|---|
| | | Gew.% Feststoff* | Einwaage (g) mit Lösemittel | Gew.% mit Lösemittel |
| PU-Lösung | | 30,0 | 150,0 | 68,1 |
| 2-Phenoxyethylmethacrylat | | 29,3 | 29,3 | 13,3 |
| 2-Hydroxyethylmethacrylat | | 22,4 | 22,4 | 10,2 |
| 2-Hydroxypropylmethacrylat | | 14,3 | 14,3 | 6,5 |
| Ethylenglykoldimethacrylat | | 3,0 | 3,0 | 1,4 |
| Eisen(II)-phthalocyanin | | 1,0 | 1,0 | 0,5 |
| | Summe | 100,0 | 220,0 | 100,0 |

| | | | | |
|---|---|---|---|---|
| * Unter Feststoff werden hier alle Stoffe verstanden, die nicht Lösemittel sind. Lösemittel ist hier ausschließlich Aceton. | | | | |

### Komponente B-P2:

200,0 g der 20%igen acetonischen Lösung von Desmomelt 530® (PU-Lösung) werden mit 24,9 g 2-Phenoxyethylmethacrylat, 31,1 g 2-Hydroxyethylmethacrylat, 3,0 g Ethylenglykoldimethacrylat und 1,0 g Eisen(II)-phthalocyanin mit einem handelsüblichen Laborrührer 10 Minuten gemischt, so dass eine Mischung mit gelösten Anteilen entsteht.

Die prozentuale Zusammensetzung der Komponente B-P2 ist in der folgenden Tabelle zusammen mit den beschriebenen Einwaagen aufgeführt:

| | **Komponente B-P2** | | | |
|---|---|---|---|---|
| | | Gew.% Feststoff* | Einwaage (g) mit Lösemittel | Gew.% mit Lösemittel |
| PU-Lösung | | 40,0 | 200,0 | 76,8 |
| 2-Phenoxyethylmethacrylat | | 24,9 | 24,9 | 9,6 |
| 2-Hydroxyethylmethacrylat | | 31,1 | 31,1 | 12,0 |
| Ethylenglykoldimethacrylat | | 3,0 | 3,0 | 1,2 |
| Eisen(II)-phthalocyanin | | 1,0 | 1,0 | 0,4 |
| | Summe | 100,0 | 260,0 | 100,0 |

| | | | | |
|---|---|---|---|---|
| * Unter Feststoff werden hier alle Stoffe verstanden, die nicht Lösemittel sind. Lösemittel ist hier ausschließlich Aceton. | | | | |

### Komponente B-P3:

150,0 g der 20%igen acetonischen Lösung von Desmomelt 530® (PU-Lösung) werden mit 29,3 g 2-Phenoxyethylmethacrylat, 22,4 g 2-Hydroxyethylmethacrylat, 14,3 g 2-Hydroxypropylmethacrylat, 3,0 g Ethylenglykoldimethacrylat und 1,0 g Mangan(II)-phthalocyanin mit einem handelsüblichen Laborrührer 10 Minuten gemischt, so dass eine Mischung mit gelösten Anteilen entsteht.

Die prozentuale Zusammensetzung der Komponente B-P3 ist in der folgenden Tabelle zusammen mit den beschriebenen Einwaagen aufgeführt:

| | **Komponente B-P3** | | | |
|---|---|---|---|---|
| | | Gew.% Feststoff* | Einwaage (g) mit Lösemittel | Gew.% mit Lösemittel |
| PU-Lösung | | 30,0 | 150,0 | 68,1 |
| 2-Phenoxyethylmethacrylat | | 29,3 | 29,3 | 13,3 |
| 2-Hydroxyethylmethacrylat | | 22,4 | 22,4 | 10,2 |
| 2-Hydroxypropylmethacrylat | | 14,3 | 14,3 | 6,5 |
| Ethylenglykoldimethacrylat | | 3,0 | 3,0 | 1,4 |
| Mangan(II)-phthalocyanin | | 1,0 | 1,0 | 0,5 |
| | Summe | 100,0 | 220,0 | 100,0 |

| | | | | |
|---|---|---|---|---|
| * Unter Feststoff werden hier alle Stoffe verstanden, die nicht Lösemittel sind. Lösemittel ist hier ausschließlich Aceton. | | | | |

### Komponente B-P4:

150,0 g der 20%igen acetonischen Lösung von Desmomelt 530® (PU-Lösung) werden mit 29,3 g 2-Phenoxyethylmethacrylat, 22,4 g 2-Hydroxyethylmethacrylat, 14,3 g 2-Hydroxypropylmethacrylat, 3,0 g Ethylenglykoldimethacrylat und 1,0 g Kobalt(II)-phthalocyanin mit einem handelsüblichen Laborrührer 10 Minuten gemischt, so dass eine Mischung mit gelösten Anteilen entsteht.

Die prozentuale Zusammensetzung der Komponente B-P4 ist in der folgenden Tabelle zusammen mit den beschriebenen Einwaagen aufgeführt:

| | **Komponente B-P4** | | | |
|---|---|---|---|---|
| | | Gew.% Feststoff* | Einwaage (g) mit Lösemittel | Gew.% mit Lösemittel |
| PU-Lösung | | 30,0 | 150,0 | 68,1 |
| 2-Phenoxyethylmethacrylat | | 29,3 | 29,3 | 13,3 |
| 2-Hydroxyethylmethacrylat | | 22,4 | 22,4 | 10,2 |
| 2-Hydroxypropylmethacrylat | | 14,3 | 14,3 | 6,5 |
| Ethylenglykoldimethacrylat | | 3,0 | 3,0 | 1,4 |
| Kobalt(II)-phthalocyanin | | 1,0 | 1,0 | 0,5 |
| | Summe | 100,0 | 220,0 | 100,0 |

| | | | | |
|---|---|---|---|---|
| * Unter Feststoff werden hier alle Stoffe verstanden, die nicht Lösemittel sind. Lösemittel ist hier ausschließlich Aceton. | | | | |

### Herstellung der reaktiven Klebstofffilme KF-A-P und KF-B-P

### Klebstofffilm KF-A-P1:

Komponente A-P1 wird mit Hilfe eines handelsüblichen Laborstreichtisches (zum Beispiel von der Firma SMO (Sondermaschinen Oschersleben GmbH)) mit einem Streichmesser auf einer silikonisierten Polyesterfolie (Trennfolie) ausgestrichen. Anschließend wird das Aceton bei 60°C im Umlufttrockenschrank 10 Minuten abgedampft. Die Spaltbreite beim Ausstreichen wird so eingestellt, dass nach dem Abdampfen des Lösemittels ein 50 µm dicker Film erhalten wird. Der erhaltene haftklebrige reaktive Klebstofffilm KF-A-P1 wird bis zur Verklebung mit einer zweiten silikonisierten Polyesterfolie abgedeckt und aufbewahrt.

### Klebstofffilm KF-A-P2:

Komponente A-P2 wird mit Hilfe eines handelsüblichen Laborstreichtisches (zum Beispiel von der Firma SMO (Sondermaschinen Oschersleben GmbH)) mit einem Streichmesser auf einer silikonisierten Polyesterfolie (Trennfolie) ausgestrichen. Anschließend wird das Aceton bei 60°C im Umlufttrockenschrank 10 Minuten abgedampft. Die Spaltbreite beim Ausstreichen wird so eingestellt, dass nach dem Abdampfen des Lösemittels ein 50 µm dicker Film erhalten wird. Der erhaltene haftklebrige reaktive Klebstofffilm KF-A-P2 wird bis zur Verklebung mit einer zweiten silikonisierten Polyesterfolie abgedeckt und aufbewahrt.

### Klebstofffilm KF-B-P1:

Komponente B-P1 wird mit Hilfe eines handelsüblichen Laborstreichtisches (zum Beispiel von der Firma SMO (Sondermaschinen Oschersleben GmbH)) mit einem Streichmesser auf einer silikonisierten Polyesterfolie (Trennfolie) ausgestrichen. Anschließend wird das Aceton bei 60°C im Umlufttrockenschrank 10 Minuten abgedampft. Die Spaltbreite beim Ausstreichen wird so eingestellt, dass nach dem Abdampfen des Lösemittels ein 50 µm dicker Film erhalten wird. Der erhaltene haftklebrige reaktive Klebstofffilm KF-B-P1 wird bis zur Verklebung mit einer zweiten silikonisierten Polyesterfolie abgedeckt und aufbewahrt.

### Klebstofffilm KF-B-P2:

Komponente B-P2 wird mit Hilfe eines handelsüblichen Laborstreichtisches (zum Beispiel von der Firma SMO (Sondermaschinen Oschersleben GmbH)) mit einem Streichmesser auf einer silikonisierten Polyesterfolie (Trennfolie) ausgestrichen. Anschließend wird das Aceton bei 60°C im Umlufttrockenschrank 10 Minuten abgedampft. Die Spaltbreite beim Ausstreichen wird so eingestellt, dass nach dem Abdampfen des Lösemittels ein 50 µm dicker Film erhalten wird. Der erhaltene haftklebrige reaktive Klebstofffilm KF-B-P2 wird bis zur Verklebung mit einer zweiten silikonisierten Polyesterfolie abgedeckt und aufbewahrt.

### Klebstofffilm KF-B-P3:

Komponente B-P3 wird mit Hilfe eines handelsüblichen Laborstreichtisches (zum Beispiel von der Firma SMO (Sondermaschinen Oschersleben GmbH)) mit einem Streichmesser auf einer silikonisierten Polyesterfolie (Trennfolie) ausgestrichen. Anschließend wird das Aceton bei 60°C im Umlufttrockenschrank 10 Minuten abgedampft. Die Spaltbreite beim Ausstreichen wird so eingestellt, dass nach dem Abdampfen des Lösemittels ein 50 µm dicker Film erhalten wird. Der erhaltene haftklebrige reaktive Klebstofffilm KF-B-P3 wird bis zur Verklebung mit einer zweiten silikonisierten Polyesterfolie abgedeckt und aufbewahrt.

### Klebstofffilm KF-B-P4:

Komponente B-P4 wird mit Hilfe eines handelsüblichen Laborstreichtisches (zum Beispiel von der Firma SMO (Sondermaschinen Oschersleben GmbH)) mit einem Streichmesser auf einer silikonisierten Polyesterfolie (Trennfolie) ausgestrichen. Anschließend wird das Aceton bei 60°C im Umlufttrockenschrank 10 Minuten abgedampft. Die Spaltbreite beim Ausstreichen wird so eingestellt, dass nach dem Abdampfen des Lösemittels ein 50 µm dicker Film erhalten wird. Der erhaltene haftklebrige reaktive Klebstofffilm KF-B-P4 wird bis zur Verklebung mit einer zweiten silikonisierten Polyesterfolie abgedeckt und aufbewahrt.

### Herstellung der reaktiven knetbaren Klebmassen KM-A-P und KM-B-P

### Klebmasse KM-A-P1:

Klebmasse KM-A-P1 wird durch Kneten des Klebstofffilms KF-A-P1 erhalten. Das Kneten erfolgt von Hand. Es kann auch in einem handelsüblichen Kneter (zum Beispiel ein Laborkneter von der Firma Haake) erfolgen. Alternativ kann die Klebmasse KM-A-P1 auch im Extrusionsverfahren aus der Komponente A-P1 erhalten werden, nachdem der Komponente zunächst das Lösemittel entzogen wird, zum Beispiel in einem Entgasungsextruder. Alle Vorgänge zur Herstellung der Klebmasse KM-A-P1 erfolgen im Temperaturbereich zwischen Raumtemperatur (23°C) und maximal 50°C.

### Klebmasse KM-B-P1:

Klebmasse KM-B-P1 wird durch Kneten des Klebstofffilms KF-B-P1 erhalten. Das Kneten erfolgt von Hand. Es kann auch in einem handelsüblichen Kneter (zum Beispiel ein Laborkneter von der Firma Haake) erfolgen. Alternativ kann die Klebmasse KM-B-P1 auch im Extrusionsverfahren aus der Komponente B-P1 erhalten werden, nachdem der Komponente zunächst das Lösemittel entzogen wird, zum Beispiel in einem Entgasungsextruder. Alle Vorgänge zur Herstellung der Klebmasse KM-B-P1 erfolgen im Temperaturbereich zwischen Raumtemperatur (23°C) und maximal 50°C.

### Probenvorbereitung für den Push-Out-Test

Aus den zu untersuchenden Klebstofffilmen KF-A-P1, KF-A-P2, KF-B-P1 und KF-B-P2, die beidseitig jeweils mit einem Trennliner abgedeckt waren, wurden runde Stanzlinge mit einem Durchmesser von 21 mm ausgestanzt. Die Trennliner wurden daraufhin jeweils von einer Seite eines Stanzlings abgezogen. Die Stanzlinge KF-A-P1 und KF-A-P2 wurden passgenau jeweils auf eine runde Probenscheibe ("Disc", erstes Substrat, erster Prüfkörper) mit ebenfalls einem Durchmesser von 21 mm aufgelegt. Die Stanzlinge KF-A-P1 und KF-A-P2 hafteten nun jeweils an der "Disc". Derart wurden Probenkörper mit Probenscheiben aus Polycarbonat, Glas und solche mit Probenscheiben aus Stahl hergestellt (siehe Tabelle). Anschließend wurde das noch auf den Stanzlingen KF-A-P1 und KF-A-P2 verbliebene Trennpapier abgezogen. Die Discs waren somit nun entweder mit KF-A-P1 oder mit KF-A-P2 ausgerüstet.

Die Stanzlinge KF-B-P1 wurden mit der nicht abgedeckten Seite jeweils auf den auf der Disc haftenden Stanzling KF-A-P1 gelegt, so dass die Stanzlinge KF-B-P1 jeweils auf den Stanzlingen KF-A-P1 hafteten. In gleicher Weise wurden die Stanzlinge KF-B-P2 mit der nicht abgedeckten Seite jeweils auf den auf der Disc haftenden Stanzling KF-A-P2 gelegt, so dass die Stanzlinge KF-B-P2 jeweils auf den Stanzlingen KF-A-P2 hafteten. Nach dem In-Kontakt-bringen von KF-A-P1 mit KF-B-P1, beziehungsweise von KF-A-P2 mit KF-B-P2, muss die anschließende Verklebung mit dem zweiten Substrat innerhalb von maximal einer Stunde erfolgen.

Zur weiteren Vorbereitung der Verklebungen wurde jeweils der letzte noch auf den Stanzlingen KF-B-P1 und KF-B-P2 verbliebene Trennliner abgezogen, so dass die Stanzlinge KF-B-P1 und KF-B-P2 jeweils offen lagen. In einer Versuchsvariante wurde auf den offenen Stanzling KF-B-P1 nochmals der vom Trennliner befreite Stanzling KF-A-P1 gelegt, so dass die Stanzling-Reihenfolge KF-A-P1 / KF-B-P1 / KF-A-P1 vorlag. Vom Stanzling KF-A-P1 wurde nun wieder der verbliebene Trennliner abgezogen, so dass Stanzling KF-A-P1 offen lag und eine Verklebung Prüfkörper / KF-A-P1 / KF-B-P1 / KF-A-P1 / Prüfkörper hergestellt werden konnte (siehe Tabelle).

### Verklebung für den Push-Out-Test

Das zweite Substrat (zweiter Prüfkörper) war eine quadratische Lochplatte, die entweder aus Polycarbonat (PC), Glas oder aus Stahl bestand (siehe Tabelle); Seitenlängen jeweils 40 mm, mit einem zentral angeordneten runden Loch (Lochdurchmesser 9 mm) in der quadratischen Platte.

Die mit den aneinander haftendenden Stanzlingen KF-A-P1 und KF-B-P1, und die mit den aneinander haftendenden Stanzlingen KF-A-P2 und KF-B-P2 sowie in der Versuchsvariante die mit den aneinander haftendenden Stanzlingen KF-A-P1, KF-B-P1 und KF-A-P1 ausgerüsteten runden Probenkörper wurden mit der jeweils offen liegenden Seite der Stanzlinge derart auf der Lochplatte positioniert, dass das Zentrum des runden Probenkörpers und das Zentrum des Lochs der Lochplatte übereinander lagen. Anschließend wurde der durch die Haftklebrigkeit der Stanzlinge zusammengehaltene Verbund aus quadratischer Lochplatte, Stanzling KF-A-P1 , Stanzling KF-B-P1 und der Disc beziehungsweise aus quadratischer Lochplatte, Stanzling KF-A-P2, Stanzling KF-B-P2 und der Disc oder in der Versuchsvariante aus quadratischer Lochplatte, Stanzling KF-A-P1, Stanzling KF-B-P1, Stanzling KF-A-P1 und Disc so auf einen Tisch gelegt, dass die quadratische Lochplatte unten lag. Auf die Disc wurde ein Gewicht von 2 kg gestellt. Der Verbund wurde dem permanenten Druck des Gewichtes a) 10 Sekunden und in einer zweiten Versuchsreihe b) 60 Sekunden jeweils bei Raumtemperatur ausgesetzt (Verpresszeit). Sodann wurde das Gewicht entfernt. Der Verbund wurde anschließend 24 Stunden bei 23°C und 50% relativer Luftfeuchtigkeit gelagert. Dabei kam es zu einer allmählich voranschreitenden Härtungsreaktion innerhalb der Stanzlinge und zu einer sich allmählich verstärkenden Haftung zwischen den Stanzlingen sowie zu den Substraten (Prüfkörpern). Es kam somit zu einer Verklebung mit einer allmählichen Festigkeitszunahme über die Zeit, die über die ursprüngliche Festigkeit durch Haftklebewirkung deutlich hinausging. Sodann erfolgte der Push-Out-Test.

### Push Out-Test

Der Push Out-Test ermöglicht Aussagen über die Verklebungsfestigkeit eines doppelseitig klebenden Klebeprodukts in Richtung der Klebschichtnormalen. Dazu wurde mittels eines in eine Zugprüfmaschine gespannten Dorns durch das Loch in der Lochplatte mit einer konstanten Geschwindigkeit von 10 mm/min senkrecht auf den runden Prüfkörper ("Disc") gedrückt (also parallel zum Normalenvektor auf die Prüfkörper-Ebene; mittig auf die Lochmitte zentriert), bis die Verklebung sich soweit löste, dass ein Druckabfall von 50 % registriert wurde. Der unmittelbar vor dem Druckabfall einwirkende Druck ist der Maximaldruck Pₘₐₓ. Dieser Wert entspricht dem in der Tabelle angegeben Push Out-Wert [N/mm²]. Alle Messungen wurden in einem klimatisierten Raum bei 23°C und 50 % relativer Luftfeuchte durchgeführt.

### Probenvorbereitung für die Bestimmung der Zugscherfestigkeit

Aus den zu untersuchenden Klebstofffilmen KF-A-P1, KF-A-P2, KF-B-P1, KF-B-P2, KF-BP3 und KF-B-P4, die beidseitig jeweils mit einem Trennpapier abgedeckt waren, wurden rechteckige Stanzlinge mit den Maßen 25,0 mm x 12,5 mm ausgestanzt. Die Trennpapiere wurden daraufhin jeweils von einer Seite eines Stanzlings abgezogen.

Die Stanzlinge KF-A-P1 und KF-A-P2 wurden passgenau jeweils auf das Ende eines ersten Prüfkörpers (Substrates) mit den Maßen 100,0 mm x 25,0 mm x 3,0 mm aufgelegt. Die Stanzlinge KF-A-P1 und KF-A-P2 hafteten nun jeweils auf diesem Prüfkörper. Derart wurden Probenkörper mit ersten Prüfkörpern aus Polycarbonat, Glas und Stahl hergestellt (siehe Tabelle). Anschließend wurde das noch auf den Stanzlingen KF-A-P1 und KF-A-P2 verbliebene Trennpapier abgezogen. Diese ersten Prüfkörper waren somit nun entweder mit KF-A-P1 oder mit KF-A-P2 ausgerüstet.

Die Stanzlinge KF-B-P1, KF-B-P3 und KF-B-P4 wurden mit der nicht abgedeckten Seite jeweils auf den auf dem ersten Prüfkörper haftenden Stanzling KF-A-P1 gelegt, so dass die Stanzlinge KF-B-P1, KF-B-P3 und KF-B-P4 jeweils auf den Stanzlingen KF-A-P1 hafteten. In gleicher Weise wurden die Stanzlinge KF-B-P2 mit der nicht abgedeckten Seite jeweils auf den auf dem ersten Prüfkörper haftenden Stanzling KF-A-P2 gelegt, so dass die Stanzlinge KF-B-P2 jeweils auf den Stanzlingen KF-A-P2 hafteten. Nach dem In-Kontakt-bringen von KF-A-P1 mit KF-B-P1, beziehungsweise von KF-A-P1 mit KF-B-P3, KF-A-P1 mit KF-B-P4 sowie KF-A-P2 mit KF-B-P2, muss die anschließende Verklebung mit dem zweiten Prüfkörper innerhalb von maximal einer Stunde erfolgen.

Zur weiteren Vorbereitung der Verklebungen wurde jeweils der letzte noch auf den Stanzlingen KF-B-P1, KF-B-P2, KF-BP3 und KF-B-P4 verbliebene Trennliner abgezogen, so dass die Stanzlinge KF-B-P1, KF-B-P2, KF-B-P3 und KF-B-P4 jeweils offen lagen. In einer Versuchsvariante wurde auf den offenen Stanzling KF-B-P1 nochmals der vom Trennliner befreite Stanzling KF-A-P1 gelegt, so dass die Stanzling-Reihenfolge KF-A-P1 / KF-B-P1 / KF-A-P1 vorlag. Vom Stanzling KF-A-P1 wurde nun wieder der verbliebene Trennliner abgezogen, so dass Stanzling KF-A-P1 offen lag und eine Verklebung erster Prüfkörper / KF-A-P1 / KF-B-P1 / KF-A-P1 / zweiter Prüfkörper hergestellt werden konnte (siehe Tabelle).

Alternativ zu den Stanzlingen KF-B-P1 und KF-B-P2 wurden zur Probenvorbereitung auch die Komponenten B1 und B2 verwendet. Dazu wurden die mit KF-A-P1 und die mit KF-A-P2 ausgerüsteten ersten Prüfkörper jeweils mit Komponente B1 gleichmäßig dünn bestreut, so dass Komponente B1 gleichmäßig verteilt auf der Oberfläche von KF-A-P1 beziehungsweise KF-A-P2 lag, aber die Oberfläche nicht abdeckte. Alternativ wurden KF-A-P1 und KF-A-P2 mit Komponente B2 dünn bepinselt. Nach dem Bestreuen beziehungsweise Bepinseln muss die anschließende Verklebung mit dem zweiten Prüfkörper innerhalb von maximal einer Stunde erfolgen.

Alternativ zu den Stanzlingen KF-A-P1 und KF-A-P2 wurden zur Probenvorbereitung auch die flüssigen Komponenten A1, A-P1 sowie A-P2 verwendet. Dazu wurde jeweils auf das Ende eines ersten Prüfkörpers mit den Maßen 100,0 mm x 25,0 mm x 3,0 mm die flüssige Komponente A1, A-P1 sowie A-P2 aufgepinselt, so dass eine Fläche von mindestens 25,0 mm x 12,5 mm mit der jeweiligen Komponente bedeckt war. Es wurde fünf Minuten gewartet, bis das Lösemittel der Komponenten A-P1 sowie A-P2 verdunstet war. Anschließend wurde Komponente B1 auf A1, A-P1 sowie A-P2 gleichmäßig dünn gestreut, so dass Komponente B1 gleichmäßig verteilt auf der Oberfläche von A1, A-P1 beziehungsweise A-P2 lag, aber die Oberfläche nicht abdeckte.

Als weitere Alternative wurde A-P1 nach dem Abdunsten des Lösemittels mit Komponente B-P1 dünn bepinselt. Ebenso wurde A-P2 nach dem Abdunsten des Lösemittels mit Komponente B-P2 dünn bepinselt. Es wurde wieder fünf Minuten gewartet, bis das Lösemittel der Komponenten B-P1 beziehungsweise B-P2 verdunstet war. Nach dem Bestreuen beziehungsweise Bepinseln muss die anschließende Verklebung mit dem zweiten Prüfkörper innerhalb von maximal einer Stunde erfolgen.

Als weitere Alternative zu den Stanzlingen KF-A-P1 und KF-A-P2 wurde zur Probenvorbereitung die Klebmasse KM-A-P1 verwendet. Diese wurde auf das Ende eines ersten Prüfkörpers mit den Maßen 100,0 mm x 25,0 mm x 3,0 mm gelegt, so dass diese daran haftete und eine Fläche von mindestens 25,0 mm x 12,5 mm bedeckte. Die Dicke der Klebmasse KM-A-P1 betrug ungefähr 0,5 mm. Anschließend wurde Komponente B1 auf KM-A-P1 gleichmäßig dünn gestreut, so dass Komponente B1 gleichmäßig verteilt auf der Oberfläche von KM-A-P1 lag, aber die Oberfläche nicht abdeckte. Alternativ wurde die in einerSchichtdicke von ungefähr 0,5 mm vorliegende Klebmasse KM-B-P1 auf KM-A-P1 gelegt, so dass beide Klebmassen aneinander hafteten. Die anschließende Verklebung mit dem zweiten Prüfkörper muss innerhalb von maximal einer Stunde erfolgen.

### Verklebung für die Bestimmung der Zugscherfestigkeit

Die zweiten Prüfkörper wurden jeweils mit einem Ende bündig auf das jeweils chemisch reagierende Klebstoffsystem der wie im letzten Kapitel beschriebenen, vorbereiteten Proben gelegt, so dass wie in DIN EN 1465 beschrieben, jeweils ein überlappender Verbund resultierte. Die Überlappungslänge betrug jeweils 12,5 mm. Die Überlappungsfläche betrug jeweils 300 mm². Die überlappenden Verbunde aus erstem Prüfkörper / reagierendes Klebstoffsystem / zweitem Prüfkörper wurden auf einen Tisch gelegt. Auf den zweiten Prüfkörper wurde jeweils ein Gewicht von 2 kg gestellt. Der Verbund wurde dem permanenten Druck des Gewichtes a) 10 Sekunden und in einer zweiten Versuchsreihe b) 60 Sekunden jeweils bei Raumtemperatur ausgesetzt (Verpresszeit). Sodann wurde das Gewicht entfernt. Der Verbund wurde anschließend jeweils 24 Stunden bei 23°C und 50% relativer Luftfeuchtigkeit gelagert. Dabei kam es zu einer allmählich voranschreitenden Härtungsreaktion innerhalb des Klebstoffsystems und zu einer sich allmählich verstärkenden Haftung zwischen dem jeweiligen Klebstoffsystem und den jeweiligen Prüfkörpern. Es kam somit zu einer Verklebung mit einer allmählichen Festigkeitszunahme über die Zeit, die über die ursprüngliche Festigkeit durch Haftklebewirkung deutlich hinausging. Sodann erfolgte die Bestimmung der Zugscherfestigkeit.

### Bestimmung der Zugscherfestigkeit

Die Bestimmung der Zugscherfestigkeit von Überlappungsverklebungen ermöglicht Aussagen über die Scherbelastbarkeit eines doppelseitig klebenden Klebeprodukts. Die Bestimmung erfolgte gemäß DIN EN 1465 mittels einer Zugprüfmaschine. Die Prüfgeschwindigkeit betrug 10 mm/min. Alle Messungen wurden in einem klimatisierten Raum bei 23°C und 50 % relativer Luftfeuchte durchgeführt.

### Ergebnisse

### Push-Out-Test

| | | | **Push-Out** | | |
|---|---|---|---|---|---|
| | | | [N/mm²] | | |
| | Klebstoffsystem | Verpresszeit/ Verpresstemperatur | PC/PC | Glas/Glas | Stahl/ Stahl |
| **Beispiel 1** | KF-A-P1 / KF-B-P1 | 10 sec / 23°C | 1,4 (K) | 0,9 (MB) | 1,2 (A) |
| | | 60 sec / 23°C | 1,7 (K) | 1,0 (MB) | 1,4 (A) |
| **Beispiel 2** | KF-A-P2 / KF-B-P2 | 10 sec / 23°C | 1,5 (K) | 1,1 (MB) | 1,1 (K) |
| | | 60 sec / 23°C | 2,2 (K) | 0,9 (MB) | 1,5 (K) |
| **Beispiel 3** | KF-A-P1 / KF-B-P1 / KF-A-P1 | 10 sec / 23°C | 1,5 (K) | 1,0 (MB) | 1,4 (A) |
| | | 60 sec / 23°C | 1,7 (K) | 0,9 (MB) | 1,4 (K) |
| **Vergleichsbeispiel** | KF-A-P2 | 10 sec / 23°C | <0,1 (K) | n.b. | n.b. |
| | | 60 sec / 23°C | <0,1 (K) | n.b. | n.b. |

| | | | | | |
|---|---|---|---|---|---|
| A = Adhäsives Versagen zwischen Stanzling und Prüfkörper. K = Kohäsives Versagen innerhalb des Stanzling-Verbundes. MB = Materialbruch des Prüfkörpers. n.b. = nicht bestimmt. | | | | | |

### Zugscherfestigkeitsprüfung

| | | | **Zugscherfestigkeit** | | |
|---|---|---|---|---|---|
| | | | [N/mm²] | | |
| | Klebstoffsystem | Verpresszeit/ Verpresstemperatur | PC/PC | Glas/Glas | Stahl/ Stahl |
| **Beispiel 1** | KF-A-P1 / KF-BP1 | 10 sec / 23°C | 3,5 (K) | 1,4 (MB) | 2,7 (A) |
| | | 60 sec / 23°C | 3,6 (K) | 1,5 (MB) | 2,9 (A) |
| **Beispiel 2** | KF-A-P1 / KF-BP3 | 10 sec / 23°C | 3,7 (K) | 1,4 (MB) | 2,6 (A) |
| | | 60 sec / 23°C | 3,8 (K) | 1,5 (MB) | 2,6 (A) |
| **Beispiel 3** | KF-A-P1 / KF-BP4 | 10 sec / 23°C | 2,7 (K) | 1,4 (MB) | 2,1 (A) |
| | | 60 sec / 23°C | 2,5 (K) | 1,5 (MB) | 2,3 (A) |
| **Beispiel 4** | KF-A-P2 / KF-BP2 | 10 sec / 23°C | 3,7 (K) | 1,5 (MB) | 3,1 (K) |
| | | 60 sec / 23°C | 3,9 (K) | 1,5 (MB) | 3,0 (K) |
| **Beispiel 5** | KF-A-P1 / KF-BP1 / KF-A-P1 | 10 sec / 23°C | 3,5 (K) | 1,4 (MB) | 2,9 (K) |
| | | 60 sec / 23°C | 3,8 (K) | 1,5 (MB) | 2,5 (K) |
| **Beispiel 6** | KF-A-P1 / B1 | 10 sec / 23°C | 2,5 (K) | n.b. | 1,8 (K) |
| | | 60 sec / 23°C | 2,5(K) | n.b. | 2,2 (K) |
| **Beispiel 7** | KF-A-P2 / B1 | 10 sec / 23°C | 2,7 (K) | n.b. | 2,6 (K) |
| | | 60 sec / 23°C | 2,9 (K) | n.b. | 2,8 (K) |
| **Beispiel 8** | KF-A-P1 / B2 | 10 sec / 23°C | 2,9 (K) | n.b. | 3,1 (K) |
| | | 60 sec / 23°C | 3,0 (K) | n.b. | 3,0 (K) |
| **Beispiel 9** | KF-A-P2 / B2 | 10 sec / 23°C | 3,6 (K) | n.b. | 3,3 (K) |
| | | 60 sec / 23°C | 3,8 (K) | n.b. | 3,0 (K) |
| **Beispiel 10** | A1 / B1 | 10 sec / 23°C | 1,8 (K) | n.b. | 1,3 (A) |
| | | 60 sec / 23°C | 1,5 (K) | n.b. | 1,1 (A) |
| **Beispiel 11** | A-P1 / B1 | 10 sec / 23°C | 2,3 (K) | n.b. | 1,4 (A) |
| | | 60 sec / 23°C | 2,2 (K) | n.b. | 1,3 (A) |
| **Beispiel 12** | A-P2 / B1 | 10 sec / 23°C | 2,9 (K) | n.b. | 1,6 (A) |
| | | 60 sec / 23°C | 2,6 (K) | n.b. | 1,3 (A) |
| **Beispiel 13** | A-P1 / B-P1 | 10 sec / 23°C | 3,3 (K) | n.b. | 2,5 (K) |
| | | 60 sec / 23°C | 3,5 (K) | n.b. | 2,7 (K) |
| **Beispiel 14** | A-P2 / B-P2 | 10 sec / 23°C | 3,6 (K) | n.b. | 2,9 (K) |
| | | 60 sec / 23°C | 3,9 (K) | n.b. | 3,1 (K) |
| **Beispiel 15** | KM-A-P1 / B1 | 10 sec / 23°C | 1,1 (K) | n.b. | 1,2 (K) |
| | | 60 sec / 23°C | 1,3 (K) | n.b. | 1,1 (K) |
| **Beispiel 16** | KM-A-P1 / KM-BP1 | 10 sec / 23°C | 0,8 (K) | n.b. | 0,7 (K) |
| | | 60 sec / 23°C | 1,3 (K) | n.b. | 1,3 (K) |
| **Vergleichsbeispiel** | KF-A-P2 | 10 sec / 23°C | <0,1 (K) | n.b. | n.b. |
| | | 60 sec / 23°C | <0,1 (K) | n.b. | n.b. |

| | | | | | |
|---|---|---|---|---|---|
| A = Adhäsives Versagen zwischen Stanzling und Prüfkörper. K = Kohäsives Versagen innerhalb des Stanzling-Verbundes. MB = Materialbruch des Prüfkörpers. n.b. = nicht bestimmt. | | | | | |

Diese Ergebnisse verdeutlichen, dass mit dem erfindungsgemäßen, reaktiven Klebstoffsystem zwei Substrate (Prüfkörper) bereits bei Raumtemperatur nach kurzer Verpresszeit mit einer Festigkeit verklebt werden können, die über die Festigkeit typischer Haftklebstoffe deutlich hinausgeht.

Das erfindungsgemäße, reaktive Klebstoffsystem ermöglicht eine verbesserte Verklebung bei gleichzeitig verbesserter Anwendbarkeit. Ein Vermischen zweier Komponenten vor der Verklebung ist nicht erforderlich.

## Patentansprüche

1. Reaktives Klebstoff-System, umfassend
(i) mindestens eine erste Klebstoffkomponente A, umfassend mindestens ein reaktives Monomer oder Reaktivharz (a) und einen Radikalinitiator (c); und
(ii) mindestens eine zweite reaktive Klebstoffkomponente B, ihrerseits umfassend mindestens ein reaktives Monomer oder Reaktivharz (a) und einen Aktivator (b), wobei der Aktivator (b) einen Mangan(II)-Komplex, Eisen(II)-Komplex oder Kobalt(II)-Komplex umfasst, jeweils mit einer Verbindung als Ligand, die ausgewählt ist aus Porphyrin, Porphyrazin, oder Phthalocyanin oder Verbindungen mit Porphyrin-, Porohyrazin- oder Phthalocyanin-Ringstruktur, die Fluor-, Chlor-, Brom-, lod-, Mthyl-, Ethyl-, Isopropyl-, Butyl-, tert-Butyl-, OH-, NH₂- oder NO₂-Substituenten tragen,
wobei die erste Klebstoffkomponente A und/oder die zweite Klebstoffkomponente B ferner eine polymere Filmbildner-Matrix (d) umfassen
und wobei die erste Klebstoffkomponente A und die zweite Klebstoffkomponente B in Filmform vorliegen.

2. Reaktives Klebstoff-System nach Anspruch 1, wobei der Aktivator (b) Mangan(II)-phthalocyanin, Eisen(II)-phthalocyanin oder Kobalt(II)-phthalocyanin umfasst.

3. Reaktives Klebstoff-System nach einem der vorangehenden Ansprüche, umfassend weitere Träger, Trennpapiere und/oder Trennliner.

4. Reaktives Klebstoff-System nach einem der vorangehenden Ansprüche, umfassend zwei oder mehr erste Klebstoffkomponenten A bzw. zweite Klebstoffkomponenten B und gegebenenfalls weitere Träger, Trennpapiere und/oder Trennliner,
wobei die zwei oder mehr ersten Klebstoffkomponenten A bzw. zweiten Klebstoffkomponenten B jeweils abwechselnd vorliegen.

5. Reaktives Klebstoff-System nach einem der vorangehenden Ansprüche, wobei
(A) die erste Klebstoffkomponente A
(i) 20-80 Gew. % mindestens eines reaktiven Monomers (a) und 2-30 Gew. % Radikalinitiator (c), vorzugs-weise 40-60 Gew. % mindestens eines reaktiven Monomers (a) und 8-15 Gew. % Radikalinitiator (c); oder
(ii) 20-80 Gew. % polymere Filmbildner-Matrix (d), 20-80 Gew. % mindestens eines reaktiven Monomers (a) und 2-30 Gew. % Radikalinitiator (c), vorzugsweise 30-50 Gew. % polymere Filmbildner-Matrix (d), 40-60 Gew. % mindestens eines reaktiven Monomers (a) und 8-15 Gew. % Radikalinitiator (c), umfasst; und
(B) die zweite Klebstoffkomponente B
(i) den Aktivator (b) in einer Menge von 0,1-5 Gew. %, vorzugsweise 0,5-2 Gew. %, enthält; oder
(ii) 20-80 Gew. % mindestens eines reaktiven Monomers (a) und 0,1-5 Gew. % Aktivator (b), vorzugsweise 40-60 Gew. % mindestens eines reaktiven Monomers (a) und 0,5-2 Gew. % Aktivator (b) umfasst; oder
(iii) 20-80 Gew. % polymere Filmbildner-Matrix (d), 20-80 Gew. % mindestens eines reaktiven Monomers (a) und 0,1-5 Gew. % Aktivator (b), vorzugsweise 30-50 Gew. % polymere Filmbildner-Matrix (d), 40-60 Gew. % mindestens eines reaktiven Monomers (a) und 0,5-2 Gew. % Aktivator (b), umfasst.

6. Reaktives Klebstoff-System nach einem der vorangehenden Ansprüche, wobei, falls vorhanden,
(i) das reaktive Monomer (a) mindestens einen Vertreter, ausgewählt aus Acrylsäure, Acrylsäureester, Methacrylsäure, Methacrylsäureester, Diacrylate, Dimethacrylate, Triacrylate, Trimethacrylate, höhere funktionelle Acrylate, höhere funktionelle Methacrylate, Vinylverbindungen und/oder oligomeren oder polymeren Verbindungen mit Kohlenstoff-Kohlenstoff-Doppelbindungen, vorzugsweise Methylmethacrylat, Methacrylsäure, Cyclohexylmethacrylat, Tetrahydrofurfurylmethacrylat, 2-Phenoxyethylmethacrylat, Di(ethylenglykol)methylethermethacrylat, 2-Hydroxyethylmethacrylat, 2-Hydroxypropylmethacrylat, 4-Hydroxybutylmethacrylat und/oder Ethylenglykoldimethacrylat, umfasst; und/oder
(ii) der Radikalinitiator (c) ein Peroxid, vorzugsweise α,α-Dimethylbenzylhydroperoxid, umfasst; und/oder
(iii) die polymere Filmbildner-Matrix (d) ein thermoplastisches Polymer, vorzugsweise ein thermoplastisches Polyurethan, ein Elastomer und/oder ein thermoplastisches Elastomer umfasst.

7. Verwendung des reaktiven Klebstoff-Systems nach einem der vorangehenden Ansprüche zur Verklebung von Materialien aus Metall, Holz, Glas und/oder Kunststoffen.

8. Verfahren zur Herstellung des reaktiven Klebstoff-Systems nach einem der vorangehenden Ansprüche, wobei das Verfahren die folgenden Schritte umfasst:
1. Auflösen und/oder Feinverteilen der Inhaltsstoffe in einem oder mehreren Lösemittel(n) und/oder Wasser;
2. Mischen der aufgelösten oder feinverteilten Inhaltsstoffe;
3. Beschichten eines Trennliners oder -papiers, eines Trägermaterials oder eines Haftklebstoffs mit der Mischung aufgelöster oder verteilter Inhaltsstoffe nach Schritt 2;
4. Verdunsten des Lösemittels und/oder Wassers; und
5. Gegebenenfalls Aufwickeln der reaktiven Klebstoffkomponente zu einer Rolle;
wobei die Inhaltsstoffe
(A) mindestens ein reaktives Monomer (a), einen Radikalinitiator (b) und eine polymere Filmbildner-Matrix (d); oder
(B) mindestens ein reaktives Monomer (a), einen Aktivator (b) und eine polymere Filmbildner-Matrix (d);
sowie gegebenenfalls weitere Additive und/oder Hilfsstoffe umfassen.

9. Verbundkörper, der durch das reaktive Klebstoff-System nach einem der Ansprüche 1 bis 6 verbunden ist.

## Claims

1. Reactive adhesive system comprising
(i) at least one first adhesive component A, comprising at least one reactive monomer or reactive resin (a) and a radical initiator (c); and
(ii) at least one second reactive adhesive component B, in turn comprising at least one reactive monomer or reactive resin (a) and an activator (b), wherein the activator (b) comprises a manganese(II) complex, iron(II) complex or cobalt(II) complex, in each case with as ligand a compound selected from porphyrin, porphyrazine or phthalocyanine or compounds with porphyrin, porphyrazine or phthalocyanine ring structure which carry fluorine, chlorine, bromine, iodine, methyl, ethyl, isopropyl, butyl, tert-butyl, OH, NH₂ or NO₂ substituents,
wherein the first adhesive component A and/or the second adhesive component B further comprise a polymeric film former matrix (d) and wherein the first adhesive component A and the second adhesive component B are present in film form.

2. Reactive adhesive system according to Claim 1, wherein the activator (b) comprises manganese(II) phthalocyanine, iron(II) phthalocyanine or cobalt(II) phthalocyanine.

3. Reactive adhesive system according to either of the preceding claims, comprising further backings, release papers and/or release liners.

4. Reactive adhesive system according to any of the preceding claims, comprising two or more first adhesive components A or second adhesive components B and optionally further backings, release papers and/or release liners,
wherein the two or more first adhesive components A or second adhesive components B are each present alternately.

5. Reactive adhesive system according to any of the preceding claims, wherein
(A) the first adhesive component A comprises
(i) from 20 to 80% by weight of at least one reactive monomer (a) and from 2 to 30% by weight radical initiator (c), preferably from 40 to 60% by weight of at least one reactive monomer (a) and from 8 to 15% by weight radical initiator (c); or
(ii) from 20 to 80% by weight polymeric film former matrix (d), from 20 to 80% by weight of at least one reactive monomer (a) and from 2 to 30% by weight radical initiator (c), preferably from 30 to 50% by weight polymeric film former matrix (d), from 40 to 60% by weight of at least one reactive monomer (a) and from 8 to 15% by weight radical initiator (c); and
(B) the second adhesive component B
(i) comprises from 0.1 to 5% by weight, preferably from 0.5 to 2% by weight activator (b); or
(ii) comprises from 20 to 80% by weight of at least one reactive monomer (a) and from 0.1 to 5% by weight of activator (b), preferably from 40 to 60% by weight of at least one reactive monomer (a) and from 0.5 to 2% by weight activator (b); or
(iii) comprises from 20 to 80% by weight polymeric film former matrix (d), from 20 to 80% by weight of at least one reactive monomer (a) and from 0.1 to 5% by weight activator (b), preferably from 30 to 50% by weight polymeric film former matrix (d), from 40 to 60% by weight of at least one reactive monomer (a) and from 0.5 to 2% by weight activator (b).

6. Reactive adhesive system according to any of the preceding claims, wherein, where present,
(i) the reactive monomer (a) comprises at least one representative selected from acrylic acid, acrylic acid esters, methacrylic acid, methacrylic acid esters, diacrylates, dimethacrylates, triacrylates, trimethacrylates, higher functional acrylates, higher functional methacrylates, vinyl compounds and/or oligomeric or polymeric compounds having carbon-carbon double bonds, preferably methyl methacrylate, methacrylic acid, cyclohexyl methacrylate, tetrahydrofurfuryl methacrylate, 2-phenoxyethyl methacrylate, di(ethylene glycol) methyl ether methacrylate, 2-hydroxyethyl methacrylate, 2-hydroxypropyl methacrylate, 4-hydroxybutyl methacrylate, and/or ethylene glycol dimethacrylate; and/or
(ii) the radical initiator (c) comprises a peroxide, preferably α,α-dimethylbenzyl hydroperoxide; and/or
(iii) the polymeric film former matrix (d) comprises a thermoplastic polymer, preferably a thermoplastic polyurethane, an elastomer and/or a thermoplastic elastomer.

7. Use of the reactive adhesive system according to any of the preceding claims for adhesively bonding materials of metal, wood, glass and/or plastics materials.

8. Method for producing the reactive adhesive system according to any of the preceding claims, wherein the method comprises the following steps:
1. dissolving and/or finely distributing the ingredients in one or more solvent(s) and/or water;
2. mixing the dissolved or finely distributed ingredients;
3. coating a release linear or release paper, a backing material or a pressure sensitive adhesive with the mixture of dissolved or distributed ingredients according to step 2;
4. evaporating the solvent and/or water; and
5. optionally winding the reactive adhesive component into a roll;
wherein the ingredients comprise
(A) at least one reactive monomer (a), a radical initiator (b) and a polymeric film former matrix (d); or
(B) at least one reactive monomer (a), an activator (b) and a polymeric film former matrix (d);
and optionally further additives and/or auxiliary substances.

9. Composite body which is bonded by means of the reactive adhesive system according to any of Claims 1 to 6.

## Revendications

1. Système d'adhésif réactif, comprenant
(i) au moins un premier composant A d'adhésif, comprenant au moins un monomère réactif ou une résine réactive (a) et un initiateur de radicaux (c) ; et
(ii) au moins un deuxième composant B d'adhésif réactif, de son côté comprenant au moins un monomère réactif ou une résine réactive (a) et un activateur (b), l'activateur (b) comprenant un complexe de manganèse(II), un complexe de fer(II) ou un complexe de cobalt(II), à chaque fois avec un composé en tant que ligand qui est choisi parmi porphyrine, porphyrazine et phtalocyanine et des composés comportant une structure de cycle porphyrine, porphyrazine ou phtalocyanine, qui portent des substituants fluor, chlore, brome, iode, méthyle, éthyle, isopropyle, butyle, tert-butyle, OH, NH₂ ou NO₂,
le premier composant A d'adhésif et/ou le deuxième composant B d'adhésif comprenant en outre une matrice (d) filmogène polymérique et le premier composant A d'adhésif et le deuxième composant B d'adhésif se trouvant sous forme de film.

2. Système d'adhésif réactif selon la revendication 1, l'activateur (b) comprenant une phtalocyanine de manganèse(II), une phtalocyanine de fer(II) ou une phtalocyanine de cobalt(II).

3. Système d'adhésif réactif selon l'une quelconque des revendications précédentes, comprenant d'autres supports, papiers de séparation et/ou gaines de séparation.

4. Système d'adhésif réactif selon l'une quelconque des revendications précédentes, comprenant deux premiers composants A d'adhésif ou plus ou deux deuxièmes composants B d'adhésif ou plus et éventuellement d'autres supports, papiers de séparation et/ou gaines de séparation,
les deux premiers composants A d'adhésif ou plus ou les deux deuxièmes composants B d'adhésif ou plus étant à chaque fois présents en alternance.

5. Système d'adhésif réactif selon l'une quelconque des revendications précédentes,
(A) le premier composant A d'adhésif comprenant
(i) 20 à 80 % en poids d'au moins un monomère réactif (a) et 2 à 30 % en poids d'initiateur de radicaux (c), de préférence 40 à 60 % en poids d'au moins un monomère réactif (a) et 8 à 15 % en poids d'initiateur de radicaux (c) ; ou
(ii) 20 à 80 % en poids de matrice filmogène polymérique (d), 20 à 80 % en poids d'au moins un monomère réactif (a) et 2 à 30 % en poids d'initiateur de radicaux (c), de préférence de 30 à 50 % en poids de matrice filmogène polymérique (d), 40 à 60 % en poids d'au moins un monomère réactif (a) et 8 à 15 % en poids d'initiateur de radicaux (c) ; et
(B) le deuxième composant B d'adhésif
(i) contenant l'activateur (b) en une quantité de 0,1 à 5 % en poids, de préférence 0,5 à 2 % en poids ; ou
(ii) comprenant 20 à 80 % en poids d'au moins un monomère réactif (a) et 0,1 à 5 % en poids d'activateur (b), de préférence 40 à 60 % en poids d'au moins un monomère réactif (a) et 0,5 à 2 % en poids d'activateur (b) ; ou
(iii) comprenant 20 à 80 % en poids de matrice filmogène polymérique (d), 20 à 80 % en poids d'au moins un monomère réactif (a) et 0,1 à 5 % en poids d'activateur (b), de préférence 30 à 50 % en poids de matrice filmogène polymérique (d), 40 à 60 % en poids d'au moins un monomère réactif (a) et 0,5 à 2 % en poids d'activateur (b).

6. Système d'adhésif réactif selon l'une quelconque des revendications précédentes, dans lequel, s'il est présent,
(i) le monomère réactif (a) comprend au moins un représentant choisi parmi l'acide acrylique, un ester d'acide acrylique, l'acide méthacrylique, un ester d'acide méthacrylique, un diacrylate, un diméthacrylate, un triacrylate, un triméthacrylate, des acrylates fonctionnalisés de manière supérieure, des méthacrylates fonctionnalisés de manière supérieure, des composés vinyliques et/ou des composés oligomériques ou polymériques comportant des doubles liaisons carbone-carbone, de préférence le méthacrylate de méthyle, l'acide méthacrylique, le méthacrylate de cyclohexyle, le méthacrylate de tétrahydrofurfuryle, le méthacrylate de 2-phénoxyéthyle, le méthacrylate de diéthylèneglycolméthyléther, le méthacrylate de 2-hydroxyéthyle, le méthacrylate de 2-hydroxypropyle, le méthacrylate de 4-hydroxybutyle et/ou le diméthacrylate d'éthylèneglycol ; et/ou
(ii) l'initiateur de radicaux (c) comprend un peroxyde, de préférence l'α,α-diméthylbenzylhydroperoxyde ; et/ou
(iii) la matrice filmogène polymérique (d) comprend un polymère thermoplastique, de préférence un polyuréthane thermoplastique, un élastomère et/ou un élastomère thermoplastique.

7. Utilisation du système d'adhésif réactif selon l'une quelconque des revendications précédentes pour le collage de matériaux composés de métal, de bois, de verre et/ou de plastiques.

8. Procédé pour la préparation du système d'adhésif réactif selon l'une quelconque des revendications précédentes, le procédé comprenant les étapes suivantes :
1. la dissolution et/ou la distribution fine des ingrédients dans un ou plusieurs solvants et/ou dans de l'eau ;
2. le mélange des ingrédients dissous ou distribués finement ;
3. le revêtement d'une gaine de séparation ou d'un papier de séparation, d'un matériau de support ou d'un adhésif autocollant avec le mélange des ingrédients dissous ou distribués selon l'étape 2 ;
4. l'évaporation du solvant et/ou de l'eau ; et
5. éventuellement l'enroulement des composants d'adhésif réactif en un rouleau ;
les ingrédients comprenant
(A) au moins un monomère réactif (a), un initiateur de radicaux (b) et une matrice filmogène polymérique (d) ; ou
(B) au moins un monomère réactif (a), un activateur (b) et une matrice filmogène polymérique (d) ;
ainsi qu'éventuellement d'autres additifs et/ou agents auxiliaires.

9. Corps composite qui est relié par le système d'adhésif réactif selon l'une quelconque des revendications 1 à 6.
